(19) 

Europäisches Patentamt

European Patent Office

Office européen des brevets

(11) **EP 4 701 305 A1**

(12) **EUROPEAN PATENT APPLICATION**

published in accordance with Art. 153(4) EPC

(43) Date of publication:
25.02.2026   Bulletin 2026/09

(21) Application number: 24806226.7

(22) Date of filing: 08.04.2024

(51) International Patent Classification (IPC):
*H04W 72/1273* $^{(2023.01)}$

(52) Cooperative Patent Classification (CPC):
H04L 5/00; H04W 72/1273; H04W 72/232

(86) International application number:
PCT/CN2024/086487

(87) International publication number:
WO 2024/234867 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.05.2023  CN 202310559513

(71) Applicant: Huawei Technologies Co., Ltd.
Shenzhen, Guangdong 518129 (CN)

(72) Inventors:
• SHI, Meng
  Shenzhen, Guangdong 518129 (CN)
• LIAO, Shuri
  Shenzhen, Guangdong 518129 (CN)
• DOU, Shengyue
  Shenzhen, Guangdong 518129 (CN)
• BAI, Zhongjin
  Shenzhen, Guangdong 518129 (CN)

(74) Representative: Grünecker Patent- und
Rechtsanwälte
PartG mbB
Leopoldstraße 4
80802 München (DE)

(54) **COMMUNICATION METHOD AND RELATED APPARATUS**

(57)    This application provides a communication method and a related apparatus. The method includes: A terminal device receives indication information from a network device, where the indication information indicates a quantity of time units occupied by one time of downlink transmission and/or a repetition count of the downlink transmission in one periodicity; and the terminal device receives the downlink transmission from the network device based on the indication information. According to technical solutions provided in this application, downlink coverage of the downlink transmission can be improved.

| Network device | Terminal device |

S401. Indication information, where the indication information indicates a quantity of time units occupied by one time of downlink transmission and/or a repetition count of the downlink transmission in one periodicity, and the quantity of time units occupied by one time of the downlink transmission is a positive integer greater than 1

S402. Send the downlink transmission based on the indication information

FIG. 4

## Description

This application claims priority to Chinese Patent Application No. 202310559513.5, filed with the China National Intellectual Property Administration on May 17, 2023 and entitled "COMMUNICATION METHOD AND RELATED APPARATUS", which is incorporated herein by reference in its entirety.

## TECHNICAL FIELD

This application relates to the field of wireless communication technologies, and in particular, to a communication method and a related apparatus.

## BACKGROUND

To support wider service coverage, a network device needs to provide a network service for a larger communication area. For example, in a non-terrestrial network (non-terrestrial network, NTN) communication system, a larger communication area may be provided through a satellite network. However, with a given link budget and system resource, the coverage of downlink transmission is insufficient due to a limited satellite link budget. Therefore, coverage enhancement needs to be considered to improve system performance. Therefore, how to improve downlink coverage of downlink transmission is an urgent problem to be resolved.

## SUMMARY

Embodiments of this application provide a communication method and a related apparatus, to improve downlink coverage of downlink transmission.

According to a first aspect, this application provides a communication method. The method may be applied to a terminal device, or may be applied to an apparatus (for example, a chip, a chip system, or a circuit) in a terminal device or an apparatus that can be used in collaboration with a terminal device. The following provides descriptions by using an example in which the method is applied to the terminal device. The method may include: A terminal device receives indication information from a network device, where the indication information indicates a quantity of time units occupied by one time of downlink transmission and/or a repetition count of the downlink transmission in one periodicity, and the quantity of time units occupied by one time of the downlink transmission is a positive integer greater than 1; and receives the downlink transmission from the network device based on the indication information.

In the solution provided in this application, the terminal device may determine, based on the indication information from the network device, at least one of the quantity of time units occupied in one downlink transmission process and the repetition count of the downlink transmission in one periodicity, to receive the downlink transmission from the network device based on the indication information. Different from that downlink transmission coverage is insufficient because downlink transmission does not support repeated transmission or next downlink transmission can be performed only in a next periodicity, in this embodiment of this application, the terminal device may determine the repetition count of downlink transmission in one periodicity based on the indication information, so that the terminal device can receive downlink transmission on a plurality of reception occasions, thereby improving downlink coverage of downlink transmission. Alternatively, different from that downlink transmission coverage is insufficient because downlink transmission supports transmission in only one time unit, in this embodiment of this application, the terminal device may determine, based on the indication information, a quantity of time units occupied in one downlink transmission process, where the quantity of time units occupied by one time of downlink transmission is a positive integer greater than 1. It can be learned that the terminal device determines, based on the indication information, the quantity of time units occupied by one time of downlink transmission, so that downlink transmission can be transmitted across time units, thereby increasing a quantity of bits that can be transmitted in one time of downlink transmission, and improving downlink coverage of downlink transmission. Alternatively, different from that downlink coverage is insufficient because occupation of a plurality of time units is not supported in one downlink transmission process or direct repeated transmission is not supported by downlink transmission, in this embodiment of this application, the terminal device may determine, based on the indication information, a repetition count of downlink transmission in one periodicity and a quantity of time units occupied by one time of downlink transmission, so that the terminal device can receive downlink transmission on a plurality of reception occasions based on the indication information, and one time of downlink transmission may occupy a plurality of time units, thereby increasing a quantity of bits that can be transmitted in one time of downlink transmission, and improving downlink coverage of downlink transmission.

In a possible implementation, the downlink transmission carries downlink signaling in an initial access procedure.

In a possible implementation, the indication information includes the quantity of time units occupied by one time of the downlink transmission; and the receiving the downlink transmission from the network device based on the indication information includes: receiving a start location of a time domain resource for the downlink transmission; determining, based on the start location and the quantity of time units occupied by one time of the downlink transmission, time domain resource locations for receiving the downlink transmission; and receiving the downlink transmission at the time domain resource locations.

In a possible implementation, the method further includes: demodulating, at the time domain resource locations based on the quantity of time units occupied by one time of the downlink transmission and a demodulation parameter, data carried in the downlink transmission, where the demodulation parameter includes at least one of the following: a TB scaling factor of a transport block (transport block, TB) in the downlink transmission, a resource quantity of a resource element (resource element, RE), a coding code rate, a modulation order, and a layer quantity.

In the solution provided in this application, the terminal device may reduce, for downlink transmission by using the TB scaling factor, a quantity of information bits transmitted on a time-frequency resource, thereby equivalently reducing a transmission code rate, so that downlink transmission can be performed at a relatively low code rate, thereby improving demodulation performance of the terminal device.

In a possible implementation, the indication information includes a first time domain resource location for the downlink transmission; and the method further includes: determining, based on the first time domain resource location and interval information, a second time domain resource location for receiving the downlink transmission, where the interval information indicates a quantity of time units between the first time domain resource location and the adjacent second time domain resource location; and the receiving the downlink transmission from the network device based on the indication information includes: receiving the downlink transmission at the first time domain resource location and/or the second time domain resource location.

In the solution provided in this application, there may be two downlink transmission occasions in a same periodicity, that is, the terminal device may have two reception occasions. Compared with one downlink transmission occasion, more downlink transmission occasions can improve downlink coverage of downlink transmission.

In a possible implementation, when the downlink transmission carries downlink signaling in an initial access procedure, the quantity of time units indicated by the interval information is a positive integer greater than or equal to 0.

In a possible implementation, the downlink signaling of the initial access procedure carried in the downlink transmission includes a system information block (system information block 1, SIB 1), a system information block (system information block 19, SIB19), and a message (message 4, Msg4) in a random access procedure; and when the downlink transmission carries the SIB1, the quantity of time units indicated by the interval information is a positive integer greater than 0.

In the solution provided in this application, for the downlink transmission to carry the SIB1, there may be at least one time unit between a first transmission occasion and a second transmission occasion of the downlink transmission, and the downlink transmission can be performed in at least one consecutive time unit, so that the terminal device can access a network faster.

In a possible implementation, there are a plurality of second time domain resource locations, the plurality of second time domain resource locations are different, and the interval information further indicates a quantity of time units between two adjacent second time domain resource locations.

In the solution provided in this application, there are a plurality of second time domain resource locations, so that downlink transmission can be transmitted for a plurality of times in a same periodicity, and the terminal device may have a plurality of reception occasions, thereby improving an access success rate.

In a possible implementation, the indication information includes the repetition count of the downlink transmission in one periodicity, and the repetition count of the downlink transmission in one periodicity is determined based on a field in downlink control information (downlink control information, DCI).

In a possible implementation, the indication information is a first value, the first value is determined based on a first bit of a field in DCI, the first value indicates a target repetition count in a repetition count set, and the repetition count set includes a plurality of repetition counts of the downlink transmission in one periodicity.

In a possible implementation, the method further includes: receiving the DCI, and obtaining, based on the field in the DCI, the repetition count of the downlink transmission in one periodicity; and the receiving the downlink transmission from the network device based on the indication information includes: receiving a start location of a time domain resource for the downlink transmission; determining, based on the start location and the repetition count of the downlink transmission in one periodicity, time domain resource locations for receiving the downlink transmission; and receiving the downlink transmission at the time domain resource locations.

In the solution provided in this application, an indication of a repetition count of downlink transmission in one periodicity may be added to a field in DCI. In one periodicity, a plurality of time domain resource locations of downlink transmission can be determined based on the repetition count and the start location of the downlink transmission, so that the downlink transmission can be performed at the plurality of time domain resource locations, and the terminal device can have a plurality of occasions to receive the downlink transmission, thereby improving an access success rate.

In a possible implementation, the indication information further includes the quantity of time units occupied by one time of the downlink transmission, and the quantity of time units occupied by one time of the downlink transmission is determined based on the field in the DCI.

In the solution provided in this application, an indication of a quantity of time units occupied by one time of downlink transmission may be added to a field in DCI, so that downlink transmission can be transmitted across time units, to increase a quantity of bits that can be transmitted in downlink transmission, and improve downlink coverage of downlink transmission.

In a possible implementation, the indication information is a second value, the second value is determined based on a second bit of the field in the DCI, the second value indicates a target time unit quantity in a time unit quantity set, and the time unit quantity set includes a plurality of quantities of time units occupied by one time of the downlink transmission.

In a possible implementation, the method further includes: receiving the DCI, and obtaining, based on the field in the DCI, the repetition count of the downlink transmission in one periodicity and the quantity of time units occupied by one time of the downlink transmission; and the receiving the downlink transmission from the network device based on the indication information includes: receiving a start location of a time domain resource for the downlink transmission; determining, based on the start location, the quantity of time units occupied by one time of the downlink transmission, and the repetition count of the downlink transmission in one periodicity, time domain resource locations for receiving the downlink transmission; and receiving the downlink transmission at the time domain resource locations.

In the solution provided in this application, an indication of a repetition count of downlink transmission in one periodicity and an indication of a quantity of time units occupied by one time of downlink transmission may be added to a field in DCI, time domain resource locations at which a plurality of time units are occupied are determined based on a start location of downlink transmission, the quantity of time units occupied by one time of downlink transmission, and the repetition count of downlink transmission in one periodicity, and the terminal device can have a plurality of occasions to receive downlink transmission, to increase a quantity of bits that can be transmitted in one time of downlink transmission, and improve downlink coverage of downlink transmission.

In a possible implementation, the field in the DCI is a modulation and coding scheme (modulation and coding scheme, MCS) field.

In a possible implementation, the indication information includes the quantity of time units occupied by one time of the downlink transmission and the repetition count of the downlink transmission in one periodicity, and the indication information is carried in DCI.

In the solution provided in this application, a quantity of time units occupied by one time of downlink transmission and a repetition count of the downlink transmission in one periodicity may be directly indicated in the DCI, so that one time of downlink transmission is repeated one or more times in a plurality of time units, thereby improving downlink coverage of downlink transmission.

In a possible implementation, the method further includes: receiving configuration information from the network device, where the configuration information includes a plurality of candidate sets, and each of the plurality of candidate sets corresponds to a group of the quantity of time units occupied by one time of the downlink transmission and the repetition count of the downlink transmission in one periodicity; and the indication information is a third value, the third value indicates a target candidate set of the plurality of candidate sets, and the indication information is carried in DCI.

In a possible implementation, the method further includes: receiving the DCI, and determining, based on the DCI, the quantity of time units occupied by one time of the downlink transmission and the repetition count of the downlink transmission in one periodicity; and the receiving the downlink transmission from the network device based on the indication information includes: receiving a start location of a time domain resource for the downlink transmission; determining, based on the start location, the quantity of time units occupied by one time of the downlink transmission, and the repetition count of the downlink transmission in one periodicity, time domain resource locations for receiving the downlink transmission; and receiving the downlink transmission at the time domain resource locations.

In the solution provided in this application, a quantity of time units occupied by one time of downlink transmission and a repetition count of downlink transmission in one periodicity may be directly indicated by using the DCI, and the time domain resource locations may be determined based on the start location of downlink transmission, the quantity of time units occupied by one time of downlink transmission, and the repetition count of downlink transmission in one periodicity. The time domain resource locations may occupy a plurality of time units, and the terminal device can have a plurality of reception occasions, and one time of downlink transmission can be transmitted across time units, to increase a quantity of bits that can be transmitted in one time of downlink transmission, and improve downlink coverage of downlink transmission.

In a possible implementation, the method further includes: sending request information to the network device, where the request information is used to request downlink enhancement.

In the solution provided in this application, the network device may determine, based on the request information, that the link budget is insufficient, and may adjust the indication information in a timely manner, to improve downlink coverage of downlink transmission.

In a possible implementation, the plurality of time units occupied by one time of the downlink transmission are consecutive.

In the solution provided in this application, when there are a plurality of time units occupied by one time of downlink transmission, the time units occupied by one time of downlink transmission are consecutive, so that the terminal device can access a network faster.

In a possible implementation, when the repetition count of the downlink transmission in one periodicity is greater than or equal to 1, the time domain resource locations are consecutive.

In the solution provided in this application, when the repetition count of the downlink transmission in one periodicity is greater than or equal to 1, the plurality of time domain resource locations are consecutive, so that the terminal device can access a network faster.

According to a second aspect, this application provides a communication method. The method may be applied to a network device, or may be applied to an apparatus (for example, a chip, a chip system, or a circuit) in a network device or an apparatus that can be used in collaboration with a network device. The following provides descriptions by using an example in which the method is applied to the network device. The method may include: A network device sends indication information to a terminal device, where the indication information indicates a quantity of time units occupied by one time of downlink transmission and/or a repetition count of the downlink transmission in one periodicity, and the quantity of time units occupied by one time of the downlink transmission is a positive integer greater than 1; and the network device sends downlink transmission to the terminal device based on the indication information.

In the solution provided in this application, the network device may indicate, to the terminal device by using the indication information, at least one of the quantity of time units occupied in one downlink transmission process and the repetition count of the downlink transmission in one periodicity, so that the terminal device can receive the downlink transmission from the network device based on the indication information. Different from that downlink transmission coverage is insufficient because downlink transmission does not support repeated transmission or next downlink transmission can be performed only in a next periodicity, in this embodiment of this application, the network device may determine the repetition count of downlink transmission in one periodicity by using the indication information, so that the terminal device can receive downlink transmission on a plurality of reception occasions, thereby improving downlink coverage of downlink transmission. Alternatively, different from that downlink transmission coverage is insufficient because downlink transmission supports transmission in only one time unit, in this embodiment of this application, the network device may indicate, by using the indication information, a quantity of time units occupied in one downlink transmission process, where the quantity of time units occupied by one time of downlink transmission is a positive integer greater than 1. It can be learned that the network device indicates, by using the indication information, the quantity of time units occupied by one time of downlink transmission, so that downlink transmission can be transmitted across time units, thereby increasing a quantity of bits that can be transmitted in one time of downlink transmission, and improving downlink coverage of downlink transmission. Alternatively, different from that downlink transmission coverage is insufficient because occupation of a plurality of time units is not supported in one downlink transmission process or direct repeated transmission is not supported by downlink transmission, in this embodiment of this application, the network device may indicate, by using the indication information, a repetition count of downlink transmission in one periodicity and a quantity of time units occupied by one time of downlink transmission, so that the terminal device can receive downlink transmission on a plurality of reception occasions based on the indication information, and one time of downlink transmission may occupy a plurality of time units, thereby increasing a quantity of bits that can be transmitted in one time of downlink transmission, and improving downlink coverage of downlink transmission.

It should be understood that an execution body of the second aspect may be the network device, and specific content of the second aspect corresponds to content of the first aspect. For corresponding features of the second aspect and beneficial effect achieved in the second aspect, refer to descriptions of the first aspect. To avoid repetition, detailed descriptions are properly omitted herein.

In a possible implementation, the downlink transmission carries downlink signaling in an initial access procedure.

In a possible implementation, the indication information includes a quantity of time units occupied by one time of downlink transmission; and the sending the downlink transmission to the terminal device based on the indication information includes: determining a start location of time domain resource locations for the downlink transmission; sending the start location to the terminal device; determining, based on the start location and the quantity of time units occupied by one time of the downlink transmission, time domain resource locations for sending the downlink transmission; and sending the downlink transmission at the time domain resource locations.

In a possible implementation, the indication information includes a first time domain resource location for the downlink transmission; and the method further includes: determining, based on the first time domain resource location and interval information, a second time domain resource location for sending the downlink transmission, where the interval information indicates a quantity of time units between the first time domain resource location and the adjacent second time domain resource location; and the sending the downlink transmission to the terminal device based on the indication information includes: sending the downlink transmission at the first time domain resource location and/or the second time domain resource location.

In a possible implementation, when the downlink transmission carries downlink signaling in an initial access procedure, the quantity of time units indicated by the interval information is a positive integer greater than or equal to 0.

In a possible implementation, the downlink signaling of the initial access procedure carried in the downlink transmission includes SIB1, SIB18, and Msg4 in a random access procedure. When the downlink transmission carries SIB1, the quantity of time units indicated by the interval information is a positive integer greater than 1.

In a possible implementation, there are a plurality of second time domain resource locations, the plurality of second time domain resource locations are different, and the interval information further indicates a quantity of time units between two adjacent second time domain resource locations.

In a possible implementation, the indication information includes the repetition count of the downlink transmission in one periodicity, and the repetition count of the downlink transmission in one periodicity is determined based on a field in DCI.

In a possible implementation, the indication information is a first value, the first value is determined based on a first bit of a field in DCI, the first value indicates a target repetition count in a repetition count set, and the repetition count set includes a plurality of repetition counts of the downlink transmission in one periodicity.

In a possible implementation, the method further includes: sending DCI, where a field in the DCI includes indication information of the repetition count of the downlink transmission in one periodicity; and the sending the downlink transmission to the terminal device based on the indication information includes: sending a start location of a time domain resource for the downlink transmission; determining, based on the start location and the repetition count of the downlink transmission in one periodicity, time domain resource locations for sending the downlink transmission; and sending the downlink transmission at the time domain resource locations.

In a possible implementation, the indication information further includes the quantity of time units occupied by one time of the downlink transmission, and the quantity of time units occupied by one time of the downlink transmission is determined based on the field in the DCI.

In a possible implementation, the indication information is a second value, the second value is determined based on a second bit of the field in the DCI, the second value indicates a target time unit quantity in a time unit quantity set, and the time unit quantity set includes a plurality of quantities of time units occupied by one time of the downlink transmission.

In a possible implementation, the method further includes: sending the DCI, where the field in the DCI includes indication information of the repetition count of the downlink transmission in one periodicity and the quantity of time units occupied by one time of downlink transmission; and the sending the downlink transmission to the terminal device based on the indication information includes: sending a start location of a time domain resource for the downlink transmission; determining the start location of the time domain resource for the downlink transmission; sending the start location to the terminal device; determining, based on the start location, the quantity of time units occupied by one time of the downlink transmission, and the repetition count of the downlink transmission in one periodicity, time domain resource locations for sending the downlink transmission; and sending the downlink transmission at the time domain resource locations.

In a possible implementation, the field in the DCI is an MCS field.

In a possible implementation, the method further includes: redefining the MCS field in the DCI.

In the solution provided in this application, the network device redefines the MCS field in the DCI, to be specific, may change a definition of the MCS field in the DCI, and indicates a repetition count of downlink transmission in one periodicity by using the MCS field, so that one time of downlink transmission can be performed in a plurality of time units, thereby improving downlink coverage of downlink transmission; or indicates a repetition count of downlink transmission in one periodicity and a quantity of time units occupied by one time of downlink transmission by using the MCS field, so that one time of downlink transmission that occupies a plurality of time units can be repeatedly performed, thereby increasing a quantity of bits that can be transmitted in one time of downlink transmission, and improving downlink coverage of downlink transmission

In a possible implementation, the indication information includes the quantity of time units occupied by one time of the downlink transmission and the repetition count of the downlink transmission in one periodicity, and the indication information is carried in DCI.

In a possible implementation, the method further includes: sending configuration information to the terminal device, where the configuration information includes a plurality of candidate sets, and each of the plurality of candidate sets corresponds to a group of the quantity of time units occupied by one time of the downlink transmission and the repetition count of the downlink transmission in one periodicity; and the indication information is a third value, the third value indicates a target candidate set of the plurality of candidate sets, and the indication information is carried in DCI.

In a possible implementation, the method further includes: sending DCI, where the DCI includes the quantity of time units occupied by one time of the downlink transmission and the repetition count of the downlink transmission in one periodicity; and the sending the downlink transmission to the terminal device based on the indication information includes: sending a start location of a time domain resource for the downlink transmission; determining the start location of the time domain resource for the downlink transmission; sending the start location to the terminal device; determining, based on the start location, the quantity of time units occupied by one time of the downlink transmission, and the repetition count of the downlink transmission in one periodicity, time domain resource locations for sending the downlink transmission; and sending the downlink transmission at the time domain resource locations.

In a possible implementation, the method further includes: adding the indication information to the DCI.

In a possible implementation, request information of the terminal device is received, where the request information is used to request downlink enhancement.

In a possible implementation, the plurality of time units occupied by one time of the downlink transmission are consecutive.

In a possible implementation, when the repetition count of the downlink transmission in one periodicity is greater than or equal to 1, the time domain resource locations are consecutive.

According to a third aspect, this application provides a communication apparatus. The communication apparatus may be a terminal device, an apparatus (for example, a chip, a chip system, or a circuit) in a terminal device, or a logical module or software that can implement all or some functions of a terminal device. The communication apparatus has a function of implementing the behavior in the method embodiment in the first aspect. For example, in a possible implementation, the communication apparatus includes:

a transceiver unit, configured to receive indication information from a network device, where the indication information indicates a quantity of time units occupied by one time of downlink transmission and/or a repetition count of the downlink transmission in one periodicity, and the quantity of time units occupied by one time of the downlink transmission is a positive integer greater than 1; and
the transceiver unit is further configured to receive the downlink transmission from the network device based on the indication information.

The function may be implemented by hardware, or may be implemented by hardware executing corresponding software. The hardware or the software includes one or more modules corresponding to the foregoing function. For beneficial effect, refer to descriptions of the first aspect. Details are not described herein again.

According to a fourth aspect, this application provides a communication apparatus. The communication apparatus may be a network device, an apparatus (for example, a chip, a chip system, or a circuit) in a network device, or a logical module or software that can implement all or some functions of a network device. The communication apparatus has a function of implementing the behavior in the method example in the second aspect. For example, in a possible implementation, the communication apparatus includes:

a transceiver unit, configured to send indication information to a terminal device, where the indication information indicates a quantity of time units occupied by one time of downlink transmission and/or a repetition count of the downlink transmission in one periodicity, and the quantity of time units occupied by one time of the downlink transmission is a positive integer greater than 1; and
the transceiver unit is further configured to send the downlink transmission to the terminal device based on the indication information.

The function may be implemented by hardware, or may be implemented by hardware executing corresponding software. The hardware or the software includes one or more modules corresponding to the foregoing function. For beneficial effect, refer to descriptions of the second aspect. Details are not described herein again.

According to a fifth aspect, this application provides a communication apparatus. The communication apparatus may be a terminal device, or an apparatus (for example, a chip, a chip system, or a circuit) in a terminal device. The apparatus may include a processor, a memory, an input interface, and an output interface. The input interface is configured to receive information from another communication apparatus other than the communication apparatus. The output interface is configured to output information to the another communication apparatus other than the communication apparatus. The processor invokes a computer program stored in the memory to perform the communication method provided in the first aspect or any implementation of the first aspect.

According to a sixth aspect, this application provides a communication apparatus. The communication apparatus may be a network device, or an apparatus (for example, a chip, a chip system, or a circuit) in a network device. The apparatus may include a processor, a memory, an input interface, and an output interface. The input interface is configured to receive information from another communication apparatus other than the communication apparatus. The output interface is configured to output information to the another communication apparatus other than the communication apparatus. The processor invokes a computer program stored in the memory to perform the communication method provided in the second aspect or any implementation of the second aspect.

According to a seventh aspect, this application provides a computer-readable storage medium. The computer-readable storage medium stores a computer program or a computer instruction. When the computer program or the computer instruction is executed by a processor, the method in any one of the first aspect and the possible implementations of the first aspect and the method in any one of the second aspect and the possible implementations of the second aspect are performed.

According to an eighth aspect, this application provides a computer program product. The computer program product includes an instruction. When the instruction is executed by a processor, the method according to any one of the first aspect and the possible implementations of the first aspect and the method according to any one of the second aspect and the possible implementations of the second aspect are performed.

According to a ninth aspect, this application provides a communication apparatus. The communication apparatus includes a processor, configured to implement the method according to any one of the first aspect and the possible implementations of the first aspect and the method according to any one of the second aspect and the possible implementations of the second aspect. In a possible implementation, the communication apparatus may further include a memory, configured to store a program instruction and/or data. The communication apparatus may be a chip system. The chip system may include a chip, or may include a chip and another discrete component.

According to a tenth aspect, this application provides a communication system. The communication system includes at least one terminal device and at least one network device. When running in the communication system, the at least one terminal device and the at least one network device are configured to perform any communication method according to the first aspect and the second aspect.

## BRIEF DESCRIPTION OF DRAWINGS

To describe embodiments of this application more clearly, the following briefly describes accompanying drawings used in the embodiments.

FIG. 1 is a diagram of an architecture of a communication system according to an embodiment of this application;
FIG. 2 is a diagram of an architecture in which an NTN network implements transparent payload transmission according to an embodiment of this application;
FIG. 3 is a diagram of another architecture in which an NTN network implements regenerative payload transmission according to an embodiment of this application;
FIG. 4 is a diagram of interaction of a communication method according to an embodiment of this application;
FIG. 5 is a diagram of interaction of a communication method according to an embodiment of this application;
FIG. 6A and FIG. 6B are diagrams of a scenario in which one time of downlink transmission occupies a plurality of consecutive time units according to an embodiment of this application;
FIG. 7 is a diagram of a scenario in which one time of downlink transmission occupies a plurality of inconsecutive time units according to an embodiment of this application;
FIG. 8 is a diagram of interaction of another communication method according to an embodiment of this application;
FIG. 9A, FIG. 9B, and FIG. 9C are diagrams of a scenario of downlink transmission according to an embodiment of this application;
FIG. 10 is a diagram of interaction in still another communication method according to an embodiment of this application;
FIG. 11 is a diagram of interaction in still another communication method according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of a terminal device according to an embodiment of this application.

## DESCRIPTION OF EMBODIMENTS

The following describes the technical solutions in embodiments of this application with reference to the accompanying drawings in embodiments of this application. The terms "system" and "network" may be used interchangeably in embodiments of this application. Unless otherwise specified, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists, where A and B may be singular or plural. In addition, in the descriptions of this application, "a plurality of" means two or more unless otherwise specified. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, or improvement made based on the technical solutions of this application shall fall within the protection scope of this application.

The following first describes technical terms that may appear in embodiments of this application. Terms used in implementations of this application are merely used to explain specific embodiments of this application, but are not intended to limit this application. In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

(1) DCI

DCI is carried on a physical downlink control channel (physical downlink control channel, PDCCH). There are a plurality of DCI formats (DCI format) for the DCI. Table 1 below shows some DCI formats and purposes thereof.

Table 1

| DCI format | Purpose |
|---|---|
| 0_0 | Schedule a physical uplink shared channel (physical uplink shared channel, PUSCH) on one cell (cell). |
| 0_1 | Schedule a PUSCH on one cell |
| 0_2 | Schedule a PUSCH on one cell |
| 1_0 | Schedule a physical downlink shared channel (physical downlink shared channel, PDSCH) on one cell |
| 1_1 | Schedule a PDSCH on one cell |
| 1_2 | Schedule a PDSCH on one cell |
| 2_0 | Indicate a slot format for a group of terminal devices |
| 2_1 | Notify a group of terminal devices that no signal transmission is performed on a physical resource block (physical resource block, PRB) and an orthogonal frequency division multiplexing (orthogonal frequency division multiplexing, OFDM) symbol that are indicated |
| 2_2 | Transmit power control commands for a PUCCH and a PUSCH |
| 2_3 | Transmit a group of power control commands for sending an SRS by one or more terminal devices |

(2) TB scaling factor

The TB scaling factor is indicated by a TB scaling field in DCI bit fields, and a correspondence between the TB scaling factor and the TB scaling field may be shown in Table 2 below.

Table 2

| TB scaling field | TB scaling factor |
|---|---|
| 00 | 1 |

(continued)

| TB scaling field | TB scaling factor |
|---|---|
| 01 | 0.5 |
| 10 | 0.25 |
| 11 | Reserved |

It can be learned from Table 2 that different TB scaling fields may correspond to different TB scaling factors. For example, a value of a TB scaling factor is less than or equal to 1, and the TB scaling factor may be used to scale a quantity of bits of a TB to reduce a code rate and enhance a cell coverage capability. When a TB scaling field is "11", a TB scaling factor is reserved.

(3) MCS

The MCS defines a quantity of valid bits that can be carried by an RE. There are a total of MCS schemes with numbers of 0 to 31, and target code rates and spectral efficiency corresponding to numbers 29 to 31 are reserved. A higher MCS index indicates a higher quantity of valid bits that can be carried. An RE is a minimum unit of resource allocation, and a resource formed by a regular OFDM symbol periodicity in time domain and a subcarrier in frequency domain is referred to as a resource unit.

The MCS defines a modulation scheme (modulation) and a code rate (code rate). Currently, supported optional modulation schemes include QPSK, 16QAM, 64QAM, and 256QAM. Each RE can transmit two bits of information with QPSK, can transmit four bits of information with 16QAM, can transmit six bits of information with 64QAM, and can transmit eight bits of information with 256QAM. The code rate is a ratio of useful bits to a total of transmitted bits, and is used to measure redundancy added to a physical layer. Redundant bits are used for forward error correction (FEC) From another perspective, the code rate may be considered as a ratio of a quantity of information bits at the top of the physical layer to a quantity of bits at the bottom of the physical layer that are mapped to the PDSCH. A lower coding rate indicates more added redundancy. Table 3 below is one of MCS tables defined in a protocol.

Table 3

| MCS index number | Modulation order $Q_m$ | Target code rate | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8870 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |

(continued)

| MCS index number | Modulation order $Q_m$ | Target code rate | Spectral efficiency |
|---|---|---|---|
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | reserved | reserved |
| 30 | 4 | reserved | reserved |
| 31 | 6 | reserved | reserved |

In Table 3, the first column is an MCS index number, and target code rates and spectral efficiency corresponding to MCS index numbers 29 to 31 are reserved. The second column is a modulation order $Q_m$, indicating a modulation scheme to be used. For example, if $Q_m$=2, it indicates that $2^2$=4, that is, QPSK, is used. For another example, if $Q_m$=4, it indicates that $2^4$=16, that is, 16QAM, is used. The third column indicates a target code rate that is a code rate expected to be reached after a modulation scheme and corresponding redundancy of a current row are selected. The fourth column is spectral efficiency, to indicate frequency efficiency when a current MCS is selected.

It can be understood that, the technical solutions in embodiments of this application may be applied to various communication systems, for example, a long term evolution (Long Term Evolution, LTE) system, an LTE frequency division duplex (frequency division duplex, FDD) system, and an LTE time division duplex (time division duplex, TDD) system. The technical solutions in embodiments of this application may be further applied to another communication system, for example, a public land mobile network (public land mobile network, PLMN) system, a long term evolution advanced (LTE advanced, LTE-A) system, a 5th generation mobile communication (5th generation, 5G) system, new radio (new radio, NR), a machine to machine (machine to machine, M2M) system, a non-terrestrial network (non-terrestrial network, NTN), or another future evolved communication system, such as a sixth generation mobile communication system. This is not limited in embodiments of this application. The technical solutions provided in embodiments of this application may be further applied to another communication system, provided that an entity in the communication system can send control information and send (and/or receive) a transport block, and another entity in the communication system can receive the control information and receive (and/or send) the transport block. The communication system provided in this application may use an open random access network (open RAN, ORAN) architecture. This is not limited.

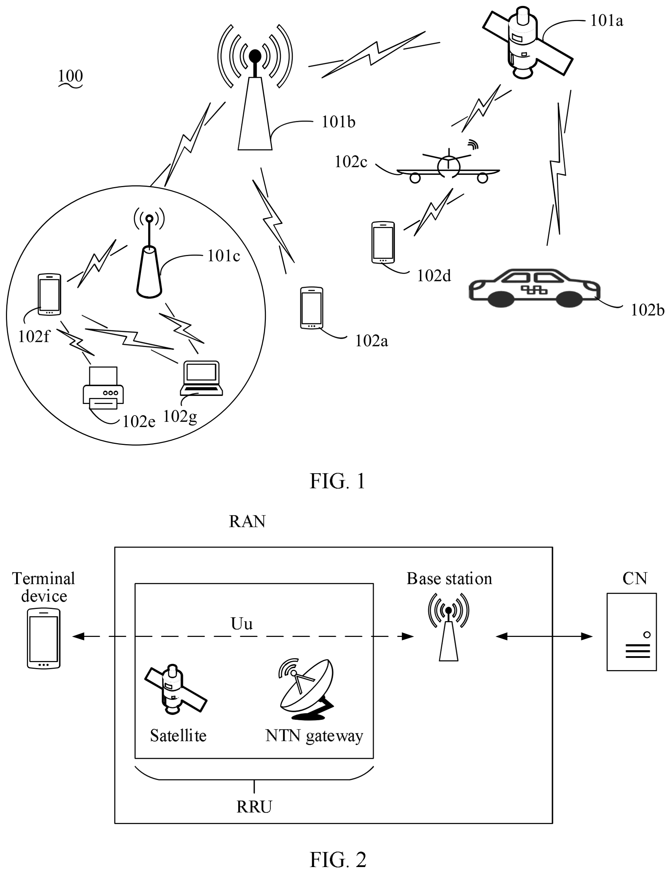

Referring to FIG. 1, FIG. 1 is a diagram of an architecture of a communication system according to an embodiment of this application. As shown in FIG. 1, the communication system may include at least one network device (101a, 101b, and 101c in FIG. 1), and may further include at least one terminal device (102a, 102b, 102c, 102d, 102e, 102f, and 102g in FIG. 1). Different network devices may be interconnected in a wired or wireless manner. The communication system shown in FIG. 1 may further include another network device, for example, may further include a wireless relay device and a wireless backhaul device.

In an NTN network, a satellite can implement transparent payload (transparent payload) transmission or regenerative payload (regenerative payload) transmission.

Referring to FIG. 2, FIG. 2 is a diagram of an architecture in which an NTN network implements transparent payload transmission according to an embodiment of this application. A terminal device communicates with a ground base station through a universal terrestrial radio access network-user (universal terrestrial radio access network-user, Uu) interface. A satellite may implement transparent payload transmission between the terminal device and the ground base station. The satellite and an NTN gateway may be considered as a remote radio unit (remote radio unit, RRU) of the ground base station, to implement transparent forwarding of a signal. That is, the satellite supports only functions such as radio frequency filtering, frequency conversion, and amplification, and a signal waveform remains unchanged. Forwarding of the satellite is transparent to the terminal device. The ground base station and a core network (core network, CN) may communicate with each other through a next generation network (next generation, NG) interface, and exchange non-access stratum (non-access stratum, NAS) signaling of the CN and service data of the terminal device through the NG interface. The ground base station and the RRU may be considered as radio access network (radio access network, RAN) nodes.

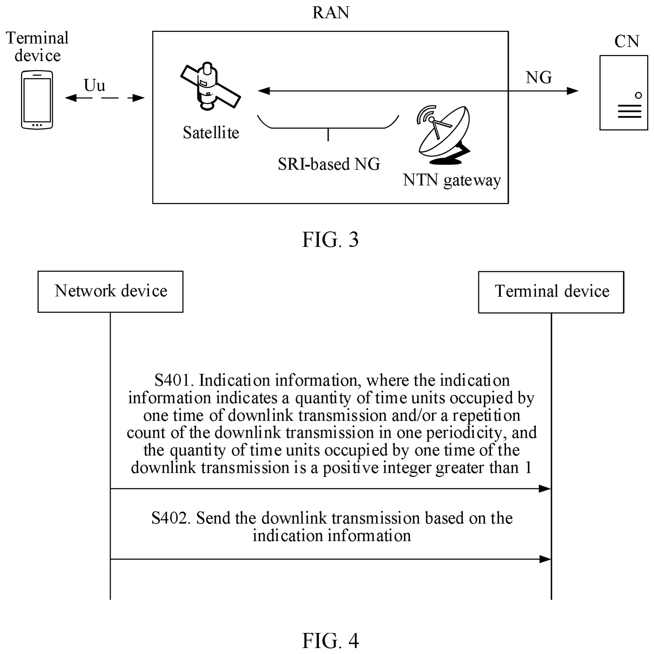

Referring to FIG. 3, FIG. 3 is a diagram of another architecture in which an NTN network implements regenerative payload transmission according to an embodiment of this application. A satellite has some or all functions of a network device, and may be referred to as a satellite base station. The satellite may provide a wireless access service, and schedule a radio resource for a terminal device that accesses a network by using the satellite base station. The satellite base station communicates with the terminal device through a Uu interface. The satellite base station and a CN may communicate with each other through an NG interface, and the satellite base station and the CN may exchange NAS signaling and service data of the terminal device through the NG interface. A satellite radio interface (satellite radio interface, SRI) interface is a feeder link between an NTN gateway and the satellite. In FIG. 3, the SRI interface may be used as a part of the NG interface to implement communication and interaction between the satellite and the CN. A ground base station and the NTN gateway may be considered as RAN nodes.

The terminal device is an entity configured to receive or transmit a signal on a user side. The terminal device may be deployed on land, where the deployment includes indoor or outdoor, or handheld or vehicle-mounted deployment, may be deployed on water (for example, on a ship), or may be deployed in air (for example, on aircraft, a balloon, or a satellite). The terminal device may be a mobile phone (mobile phone), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (telemedicine), a wireless terminal device in a smart grid (smart grid), a wireless terminal in transportation safety (transportation safety), a wireless terminal device in a smart city (smart city), a wireless terminal in a smart home (smart home), user equipment (user equipment, UE), or the like.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an internet of things (internet of things, IoT) system. An IoT is an important part of future development of information technologies, and a main technical feature of the IoT is to connect things to a network by using a communication technology, to implement an intelligent network for human-machine interconnection or thing-thing interconnection. In embodiments of this application, the IoT technology can implement massive connections, deep coverage, and terminal power saving by using, for example, a narrow band (narrow band, NB) technology.

The network device may be an entity configured to transmit or receive a signal, and may be a device configured to communicate with the terminal device. The network device may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. This is not limited in embodiments of this application. The network device may be a device in a wireless network, for example, a RAN node that enables a terminal to access the wireless network. Currently, the RAN node may be, for example, a base station, a next generation NodeB (next generation NodeB, gNB), a transmission reception point (transmission reception point, TRP), an eNB, a home base station, a baseband unit (baseband unit, BBU), or an access point (access point, AP) in a Wi-Fi system. In a network structure, the network device may include a central unit (central unit, CU) node, or a distributed unit (distributed unit, DU) node, or a RAN device including a CU node and a DU node.

In different systems, the CU (including a CU-CP and a CU-UP) or the DU may also have different names, but persons skilled in the art may understand meanings thereof. For example, in an open radio access network (open radio access network, O-RAN) system, a CU may also be referred to as an O-CU (open CU), a DU may also be referred to as an O-DU, a CU-CP may also be referred to as an O-CU-CP, and a CU-UP may also be referred to as an O-CU-UP.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry an instruction and/or data.

It should be noted that quantities and types of network devices and terminal devices included in the network architectures shown in FIG. 1 to FIG. 3 are merely examples. Embodiments of this application are not limited thereto. For example, there may be more or fewer terminal devices that communicate with a network device. For example, there may be more or fewer core network devices that communicate with a network device. For conciseness of description, this is not described one by one in the accompanying drawings. In addition, although the network device, the terminal device, and the core network device are shown in the network architectures shown in FIG. 1 to FIG. 3, the application scenario may include but is not limited to the network device, the terminal device, and the core network device, for example, may further include a device configured to carry a virtualized network function, a wireless relay device, a wireless backhaul device, and the like. These are evident to persons skilled in the art. Details are not described herein.

This application provides a communication method. The following separately describes the communication method by using the following embodiments. It should be understood that these communication methods may be used in combination with each other.

It should be understood that downlink transmission may change with evolution of the technical solutions, and the technical solutions provided in this application are not limited to the processes described below. Further, descriptions of scenarios in embodiments of this application are merely examples, and the solutions in embodiments of this application are not limited to being applicable to only the described scenarios, and are also applicable to a scenario with a similar problem.

In embodiments (for example, the following embodiments corresponding to FIG. 4 to FIG. 11) of this application, an example in which a terminal device and a network device serve as execution bodies of interaction examples is used to illustrate the method, but the execution bodies of the interaction examples are not limited in this application. For example, the terminal device may alternatively be an apparatus (for example, a chip, a chip system, or a circuit) in a terminal device, or may be a logical module or software that can implement all or some functions of a terminal device; and the network device may alternatively be an apparatus (for example, a chip, a chip system, or a circuit) in a network device, or may be a logical module or software that can implement all or some functions of a network device. In embodiments of this application, uniform descriptions are provided herein, and details are not described below again.

With reference to the foregoing network architecture, the following describes a communication method provided in an embodiment of this application. Referring to FIG. 4, FIG. 4 is a diagram of interaction of a communication method according to an embodiment of this application. As shown in FIG. 4, the communication method may include S401 and S402.

S401. A network device sends indication information to a terminal device, where the indication information indicates a quantity of time units occupied by one time of downlink transmission and/or a repetition count of the downlink transmission in one periodicity, and the quantity of time units occupied by one time of the downlink transmission is a positive integer greater than 1. Correspondingly, the terminal device receives the indication information from the network device.

In this embodiment, the downlink transmission carries downlink signaling sent by the network device to the terminal device in an initial access procedure. The signaling carried in the downlink transmission may include a SIB 1, a SIB19, a message 2 (message 2, Msg2), RRC setup complete information (RRC setup complete information), Msg4 in a random access procedure, subsequent added other necessary signaling in the initial access procedure, or the like.

The terminal device may establish a connection between the terminal device and the network device by using the initial access procedure, so that data can be transmitted between the terminal device and the network device. The initial access procedure includes: detecting a primary synchronization signal (primary synchronization signal, PSS) and a secondary synchronization signal (secondary synchronization signal, SSS) from the network device, to receive a synchronization signal block (synchronization signal band, SSB) from the network device, where the SSB includes a PSS, an SSS, and a physical broadcast channel (physical broadcast channel, PBCH); obtaining a master information block (master information block, MIB) from the PBCH; and if it is determined, based on the MIB, that the SSB is a cell-defined synchronization signal block (cell-defined-SSB, CD-SSB), determining a common search space (common search space, CSS) and a control resource set (control resource set, CORESET) #0 based on an indication of the MIB; if it is determined, based on the MIB, that the SSB is a non-cell-defined synchronization signal block (non-cell-defined-SSB, Non-CD-SSB), searching for a CD-SSB based on an indication of the Non-CD-SSB, and determining a CSS and a CORESET #0 based on an indication of an MIB of the found CD-SSB; determining, based on the CORESET #0 and the CSS, a candidate resource used for a PDCCH, where the PDCCH carries DCI; and detecting the DCI in the candidate resource for the PDCCH; after the DCI is detected, receiving a PDSCH based on scheduling information indicated by the DCI, where the PDSCH carries system information of a cell, that is, the system information of the cell is obtained based on an indication of the DCI; and initiating a random access procedure to the network device based on the system information, to establish a connection between the terminal device and the network device.

The time unit in this embodiment may be a time domain resource unit, and is used to transmit a system message or user data in a downlink transmission process. For example, the time unit may be a time domain resource unit of a PDSCH, or the time unit may be a slot (slot), a minislot (minislot), a subframe (subframe), a frame (frame), a transmission time interval (transmission time interval, TTI), or the like.

A repetition count of downlink transmission in one periodicity may be understood as a repetition transmission occasion of downlink transmission in one periodicity. For example, if the repetition count of downlink transmission in one periodicity is 0, it may indicate that a total quantity of times of downlink transmission is 1, that is, there is no repetition transmission occasion for the downlink transmission. If the repetition count of downlink transmission in one periodicity is 1, it may indicate that a total quantity of times of downlink transmission is 2, that is, there is one repetition transmission occasion for the downlink transmission. If the repetition count of downlink transmission in one periodicity is 2, it may indicate that a total quantity of times of downlink transmission is 3, that is, there are two repetition transmission occasions for the downlink transmission.

It may be understood that when the repetition count of downlink transmission in one periodicity is greater than or equal to 1, the terminal device can receive the downlink transmission on a plurality of reception occasions based on the indication information, and a quantity of times that the terminal device actually receives the downlink transmission is less than or equal to a total quantity of transmission times. For example, when the terminal device successfully receives and successfully demodulates, on the first reception occasion, data carried in the downlink transmission, the terminal device does not receive the downlink transmission on remaining reception occasions.

The indication information indicates a quantity of time units occupied by one time of downlink transmission and/or a repetition count of the downlink transmission in one periodicity, where that the quantity of time units occupied by one time of the downlink transmission is a positive integer greater than 1 may be any one of the following implementations:

In a first possible implementation, the indication information may include a quantity of time units occupied by one time of downlink transmission.

In a second possible implementation, the indication information may include a first time domain resource location for downlink transmission.

In a third possible implementation, the indication information may include the repetition count of the downlink transmission in one periodicity, and the repetition count of the downlink transmission in one periodicity is determined based on a field in DCI. Alternatively, the indication information is a first value, the first value is determined based on a first bit of a field in DCI, the first value indicates a target repetition count in a repetition count set, and the repetition count set includes a plurality of repetition counts of the downlink transmission in one periodicity.

In a fourth possible implementation, the indication information may include a repetition count of the downlink transmission in one periodicity and a quantity of time units occupied by one time of downlink transmission, and both the repetition count of the downlink transmission in one periodicity and the quantity of time units occupied by one time of downlink transmission are determined based on a field in DCI.

In a fifth possible implementation, the indication information may include the quantity of time units occupied by one time of the downlink transmission and the repetition count of the downlink transmission in one periodicity, and the indication information is carried in DCI. Alternatively, the indication information is a third value, the indication information indicates a target candidate set of the plurality of candidate sets, and the indication information is carried in DCI, where the candidate sets are carried in configuration information of the network device, the configuration information includes a plurality of candidate sets, and each of the plurality of candidate sets corresponds to a group of the quantity of time units occupied by one time of the downlink transmission and the repetition count of the downlink transmission in one periodicity.

It may be understood that the indication information may be predefined. For example, the indication information may be predefined in a protocol. The network device and the terminal device may implement downlink transmission based on the indication information predefined in the protocol. Alternatively, the indication information may be preconfigured by the network device. For example, the network device may send the indication information to the terminal device by using a PDCCH, and the terminal device demodulates the PDCCH to obtain the indication information, to implement downlink transmission.

The network device may send the indication information to the terminal device by using signaling transmitted at a same moment or signaling transmitted at different moments. For example, the network device may indicate, to the terminal device by using signaling transmitted at a same moment, a quantity of time units occupied by one time of downlink transmission and a repetition count of downlink transmission in one periodicity. The network device may separately indicate, to the terminal device by using signaling transmitted at different moments, a quantity of time units occupied by one time of downlink transmission and a repetition count of downlink transmission in one periodicity.

S402. The network device sends the downlink transmission to the terminal device based on the indication information. Correspondingly, the terminal device receives the downlink transmission from the network device based on the indication information.

After receiving the indication information from the network device, the terminal device may receive downlink transmission based on the indication information.

The downlink transmission coverage is insufficient because downlink transmission is transmitted only once in one periodicity and/or one time of downlink transmission occupies only one time unit. In this embodiment, the network device may send indication information to the terminal device, where the indication information includes the quantity of time units occupied by one time of downlink transmission and/or the repetition count of the downlink transmission in one periodicity, so that the terminal device can receive, based on the indication information, downlink transmission on a plurality of reception occasions and/or determine, based on the indication information, a larger quantity of time units occupied by one time of downlink transmission, thereby improving downlink coverage of downlink transmission.

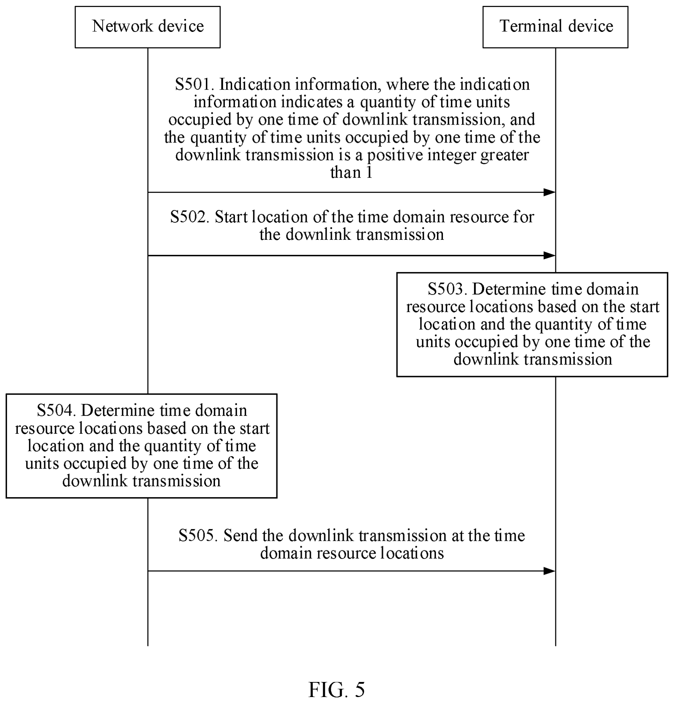

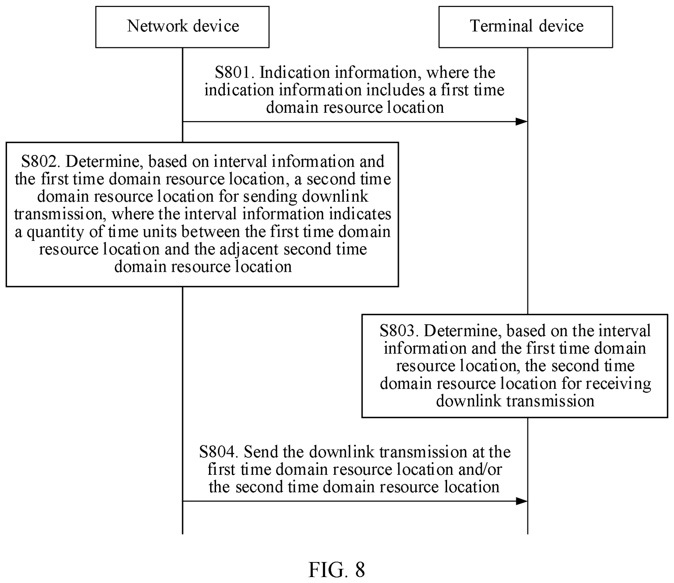

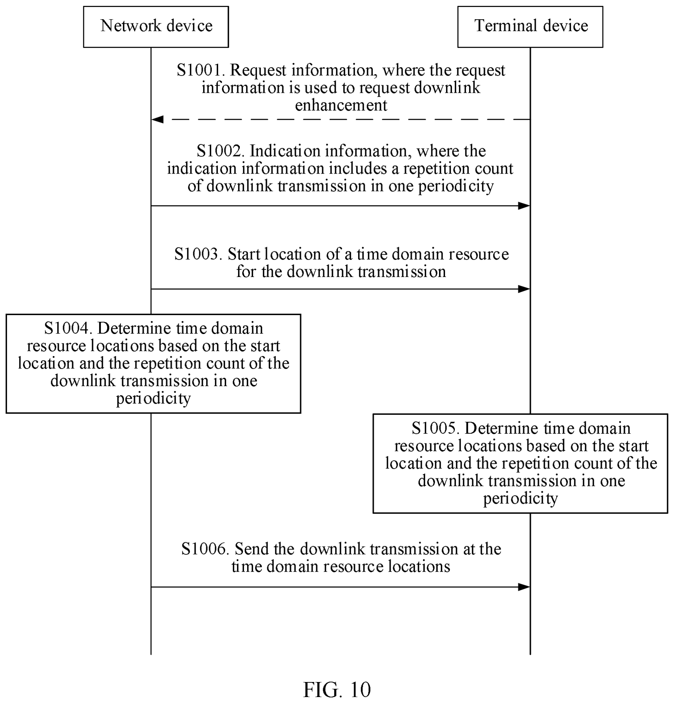

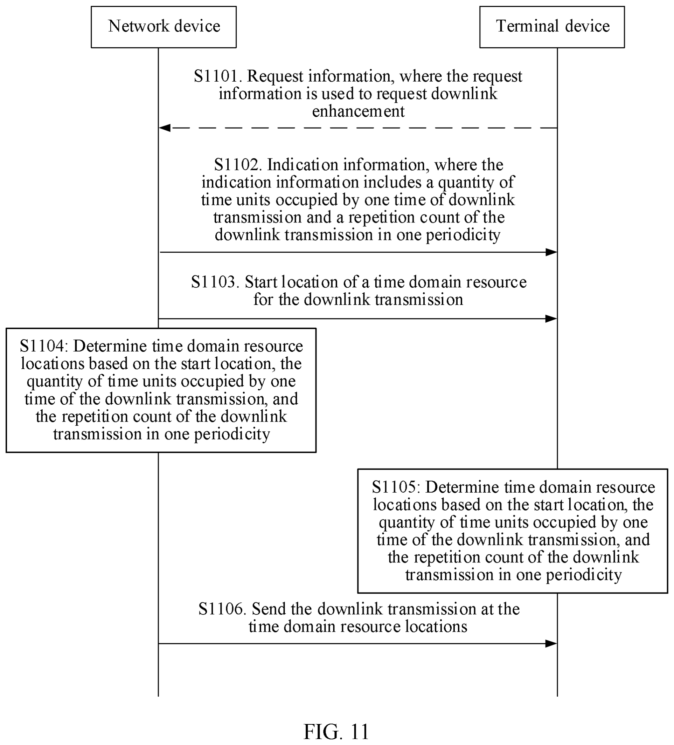

For some specific implementations and beneficial effects of the method embodiment shown in FIG. 4, refer to the following descriptions of FIG. 5 to FIG. 11. In other words, the embodiments shown in FIG. 5 to FIG. 11 are specific implementations of the embodiment shown in FIG. 4. To avoid redundancy, details are not described in the embodiment in FIG. 4. The method embodiment in FIG. 5 may correspond to the first possible implementation of the indication information in step S401. The method embodiment in FIG. 8 may correspond to the second possible implementation of the indication information in step S401. The method embodiment in FIG. 10 may correspond to the third possible implementation of the indication information in step S401. The method embodiment in FIG. 11 may correspond to the fourth possible implementation of the indication information in step S401, or may correspond to the fifth possible implementation of the indication information in step S401.

The following describes a communication method provided in an embodiment of this application. It should be understood that explanations of terms in different embodiments of this application may refer to each other. To avoid redundant descriptions, a same term may not be described again in different embodiments. Referring to FIG. 5, FIG. 5 is a diagram of interaction of a communication method according to an embodiment of this application. As shown in FIG. 5, the communication method includes steps S501 to S505.

S501. A network device sends indication information to a terminal device, where the indication information indicates a quantity of time units occupied by one time of downlink transmission, and the quantity of time units occupied by one time of the downlink transmission is a positive integer greater than 1. Correspondingly, the terminal device receives the indication information from the network device.

It may be understood that for specific descriptions of step S501, refer to step S401. Details are not described again.

An implementation of the indication information may correspond to the first possible implementation of the indication information in step S401. To be specific, the indication information includes a quantity of time units occupied by one time of downlink transmission, and the quantity of time units occupied by one time of the downlink transmission is a positive integer greater than 1.

The quantity of time units occupied by one time of the downlink transmission is a positive integer greater than 1. It may be understood that the quantity of time units occupied by one time of the downlink transmission is plural, for example, may be 2, 3, or 4. The quantity of time units occupied by one time of the downlink transmission is not limited in this embodiment.

The indication information corresponding to the quantity of time units occupied by one time of the downlink transmission may be carried in a DCI format 1_0. In other words, the quantity of time units occupied by one time of the downlink transmission may be added to the DCI format 1_0. For example, a reserved bit in the DCI format 1_0 may be used to represent the quantity of time units occupied by one time of the downlink transmission.

In a possible implementation, a candidate occupation time unit quantity set may be predefined. The candidate occupation time unit quantity set includes a plurality of time unit quantities. Then, two reserved bits in the DCI format 1_0 are used to indicate one time unit quantity of the candidate occupation time unit quantity set. In other words, the indication information may be specifically a value, the value is determined by using the two reserved bits in the DCI format 1_0, and the value indicates one time unit quantity of the candidate occupation time unit quantity set. For example, the candidate occupation time unit quantity set is {2, 4, 8, 16}, and a correspondence between an indication of two reserved bits in the DCI format 1_0 and the candidate occupation time unit quantity set is shown in Table 4:

Table 4

| Reserved bit | Time unit quantity |
|--------------|--------------------|
| 00 | 2 |
| 01 | 4 |
| 10 | 8 |
| 11 | 16 |

When the two reserved bits in the DCI format 1_0 are 00, it indicates that the first time unit quantity of the candidate occupation time unit quantity set is 2, that is, a quantity of time units occupied by one time of downlink transmission is 2. When the two reserved bits in the DCI format 1_0 are 01, it indicates that the second time unit quantity of the candidate occupation time unit quantity set is 4, that is, a quantity of time units occupied by one time of downlink transmission is 4. When the two reserved bits in the DCI format 1_0 are 10, it indicates that the third time unit quantity of the candidate occupation time unit quantity set is 8, that is, a quantity of time units occupied by one time of downlink transmission is 8. When the two reserved bits in the DCI format 1_0 are 11, it indicates that the fourth time unit quantity of the candidate occupation time unit quantity set is 16, that is, a quantity of time units occupied by one time of downlink transmission is 16.

S502. The network device determines a start location of a time domain resource for downlink transmission, and the network device sends the start location to the terminal device. Correspondingly, the terminal device receives the start location of the time domain resource for the downlink transmission that is sent by the network device.

The network device may send the indication information and the start location for the downlink transmission to the terminal device by using a PDCCH. The terminal device demodulates the PDCCH to obtain the indication information and the start location for the downlink transmission.

S503. The terminal device determines time domain resource locations based on the start location and the quantity of time units occupied by one time of the downlink transmission.

After receiving the start location of the time domain resource for the downlink transmission that is sent by the network device, the terminal device may determine the time domain resource locations based on the start location and the quantity of time units occupied by one time of the downlink transmission.

S504. The network device determines time domain resource locations based on the start location and the quantity of time units occupied by one time of the downlink transmission.

After sending the start location of the time domain resource for the downlink transmission to the terminal device, the network device may determine the time domain resource locations based on the start location and the quantity of time units occupied by one time of the downlink transmission.

S505. The network device sends the downlink transmission to the terminal device at the time domain resource locations. Correspondingly, the terminal device receives the downlink transmission from the network device at the time domain resource locations. After determining the time domain resource locations, the network device may send the downlink transmission to the terminal device at the time domain resource locations.

After determining the time domain resource locations, the terminal device may receive the downlink transmission from the network device at the time domain resource locations.

Optionally, after the network device determines the start location of the time domain resource for downlink transmission, the network device determines the time domain resource locations based on the start location and the quantity of time units occupied by one time of downlink transmission. After determining the time domain resource locations, the network device sends the start location and the time domain resource locations to the terminal device. In other words, the terminal device does not need to determine the time domain resource locations based on the start location and the quantity of time units occupied by one time of downlink transmission.

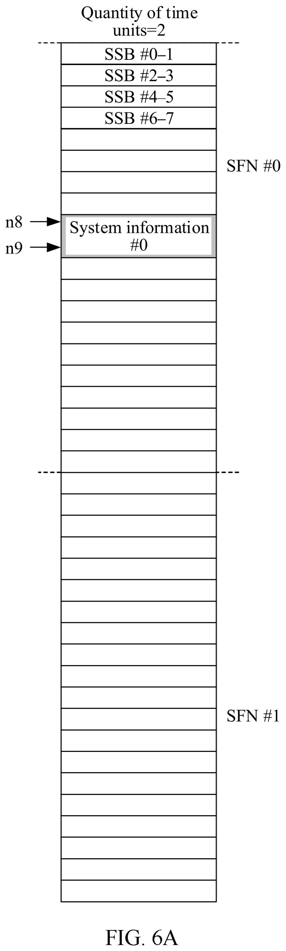

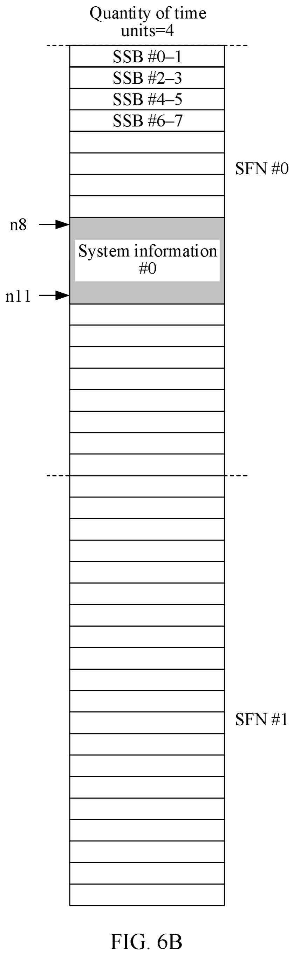

Examples in which two time units and four time units are occupied by one time of downlink transmission are separately used below for description. Referring to FIG. 6A and FIG. 6B, FIG. 6A and FIG. 6B are diagrams of a scenario in which downlink transmission occupies a plurality of time units according to an embodiment of this application. As shown in FIG. 6A, when a quantity of time units occupied by one time of downlink transmission is equal to 2, for a terminal device of an SSB #0, if data carried in the downlink transmission is system information (system information #0 shown when a quantity of time units is 2 in FIG. 6A), and a start location of the downlink transmission is a time unit n8 (in a frame SFN #0, a first time unit is denoted as a time unit n0, and a frame SFN #1 and a frame SFN #0 are consecutive), a network device sends the downlink transmission in the time unit n8 and a time unit n9. Correspondingly, the terminal device receives the downlink transmission in the time unit n8 and the time unit n9.

As shown in FIG. 6B, when a quantity of time units occupied by one time of downlink transmission is equal to 4, for a terminal device of an SSB #0, if data carried in the downlink transmission is system information (system information #0 shown when a quantity of time units is 4 in FIG. 6B), and a start location of the downlink transmission is a time unit n8, a network device sends the downlink transmission in the time unit n8 to a time unit n11. Correspondingly, the terminal device receives the downlink transmission in the time unit n8 to the time unit n11.

The system information may be a SIB1 or a SIB 19, where the SIB1 and the SIB19 are merely examples, and may be actually other system messages that carry ephemeris information.

A plurality of time units occupied by one time of downlink transmission may be consecutive, as shown in FIG. 6A and FIG. 6B. In this way, when the terminal device demodulates data carried in the downlink transmission that occupies the plurality of consecutive time units, data demodulation performance is better.

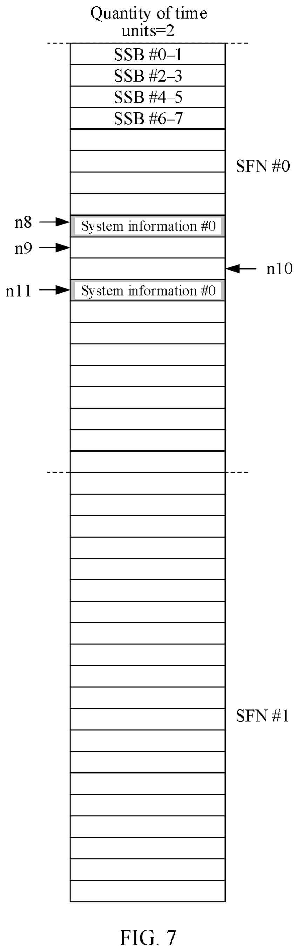

It may be understood that a plurality of time units occupied by one time of downlink transmission may be inconsecutive. As shown in FIG. 7, FIG. 7 is a diagram of a scenario in which one time of downlink transmission occupies a plurality of inconsecutive time units according to an embodiment of this application. For example, downlink transmission carrying system information #0 occupies two time units, and the two time units occupied by the downlink transmission carrying the system information #0 may be a time unit n8 and a time unit n11, the system information is one of the foregoing listed system information, and downlink transmission carrying other data (different from data in the time unit n8 and the time unit n11) may be transmitted in a time unit n9 and a time unit n10. It can be learned that when a plurality of time units occupied by one time of downlink transmission are inconsecutive, the network device may flexibly schedule downlink transmission carrying different data.

Optionally, the communication method may further include: The terminal device may demodulate, at time domain resource locations based on a demodulation parameter and a quantity of time units occupied by one time of downlink transmission, data carried in the downlink transmission. The demodulation parameter includes at least one of the following: a TB scaling factor $TB_{scaling}$ of one TB in downlink transmission, a resource quantity $N_{RE}$ of an RE, a coding code rate R, a demodulation order $Q_m$, and a layer quantity v. The TB scaling factor $TB_{scaling}$ may be determined based on Table 2, the resource quantity $N_{RE}$ represents a quantity of occupied RE resources, the demodulation order $Q_m$ represents a modulation order, the coding code rate R represents a target code rate determined based on an MCS level, and the layer quantity may be a downlink layer quantity.

After receiving the data carried in the downlink transmission, the terminal device may adjust the quantity of information bits based on one or more of the foregoing demodulation parameters and a quantity (denoted as $TB_{slots}$) of time units occupied by one time of downlink transmission, and perform rate matching after encoding to equivalently further reduce a code rate, thereby improving demodulation performance of the terminal device. The quantity $N_{info}$ of information bits may be calculated by using the following formula:

$$N_{info} = TB_{slots} * TB_{scaling} * N_{RE} * R * Q_m * v(layer)$$

It may be understood that sequence numbers of the foregoing processes do not mean an execution sequence in this embodiment. For example, step S503 may be performed before S504, or may be performed after S504, or may be performed simultaneously with S504. The execution sequence of the processes should be determined according to functions and internal logic of the processes, and should not be construed as any limitation on the implementation processes of this embodiment.

In this embodiment, different from downlink transmission in a single time unit, when a TB is heavily loaded, the single time unit cannot carry the entire downlink transmission, that is, the single time unit can carry only partial downlink transmission, and cannot further reduce a code rate to improve downlink coverage. In this embodiment, the network device may indicate, by using the indication information, a quantity of time units occupied by one time of downlink transmission, where the quantity of time units occupied by one time of downlink transmission is a positive integer greater than 1. It can be learned that the terminal device determines, based on the indication information, a larger quantity of time units occupied by one time of downlink transmission, so that downlink transmission can be transmitted across time units, to increase a quantity of bits that can be transmitted in downlink transmission, and improve downlink coverage of downlink transmission with a relatively large quantity of carried information bits. In addition, when downlink transmission occupies a plurality of inconsecutive time units, the network device can flexibly schedule downlink transmission that carries different data. In addition, the TB scaling factor and the quantity of time units occupied by one time of downlink transmission are combined, so that a code rate of downlink transmission with a relatively large quantity of carried information bits can be further reduced, to improve demodulation performance of the terminal device in demodulating data carried in the downlink transmission.

Referring to FIG. 8, FIG. 8 is a diagram of interaction of another communication method according to an embodiment of this application. As shown in FIG. 8, the communication method includes steps S801 to S804.

S801. A network device sends indication information to a terminal device, where the indication information includes a first time domain resource location for downlink transmission, and correspondingly, the terminal device receives the first time domain resource location sent by the network device.

It may be understood that for specific descriptions of step S801, refer to step S401. Details are not described again.

An implementation of the indication information may correspond to the second possible implementation of the indication information in step S401, that is, the indication information includes the first time domain resource location for downlink transmission.

It should be noted that, the indication information including the first time domain resource location for the downlink transmission indicates that a repetition count of the downlink transmission in one periodicity is 0, that is, the downlink transmission is transmitted only once. In other words, the network device may define, in a protocol, that the quantity of transmission times is 1 and the repetition count is 0.

The indication information including the first time domain resource location may indicate that the indication information is the first time domain resource location.

S802. The network device determines, based on interval information and the first time domain resource location, a second time domain resource location for sending downlink transmission. The interval information indicates a quantity of time units between the first time domain resource location and the adjacent second time domain resource location.

After the network device determines the first time domain resource location and the second time domain resource location, the network device can send same downlink transmission at the first time domain resource location and the second time domain resource location. In other words, data carried in the downlink transmission at the first time domain resource location is the same as data carried in the downlink transmission at the second time domain resource location.

Optionally, interval information X may be defined in a protocol (TS 38.213). After a value of the interval information X is defined in the protocol (TS 38.213), the value of the interval information X is fixed, and both the network device and the terminal device determine the second time domain resource location based on the fixed interval information.

Alternatively, the interval information X may be configured by the network device, and the network device may send the interval information X and the first time domain resource location to the terminal device by using a PDCCH. The terminal device may demodulate the PDCCH to obtain the interval information X and the first time domain resource location.

For example, assuming that the start location of the first time domain resource location is n, the second time domain resource location may be represented as n+X+1, where X is a specific value corresponding to the interval information. It may be understood that the network device or the protocol (TS 38.213) may indicate the interval information X by defining information Y, where the information Y=X+1. In this case, the network device may determine the second time domain resource location n+Y based on the information Y and the first time domain resource location n, and the terminal device may determine the second time domain resource location n+Y based on the information Y and the first time domain resource location n.

S803. The terminal device determines, based on the interval information and the first time domain resource location, the second time domain resource location for receiving downlink transmission.

After receiving the first time domain resource location from the network device, the terminal device may determine, based on the interval information X and the first time domain resource location, the second time domain resource location for receiving the downlink transmission.

After the terminal device determines the first time domain resource location and the second time domain resource location, the terminal device can receive same downlink transmission at the first time domain resource location and the second time domain resource location.

S804. The network device sends the downlink transmission at the first time domain resource location and/or the second time domain resource location. Correspondingly, the terminal device receives the downlink transmission at the first time domain resource location and/or the second time domain resource location.

After determining the first time domain resource location and the second time domain resource location, the network device may send the downlink transmission to the terminal device at the first time domain resource location, and the terminal device may receive the downlink transmission at the first time domain resource location; the network device may send the downlink transmission to the terminal device at the second time domain resource location, and the terminal device may receive the downlink transmission at the second time domain resource location; or the network device may send the downlink transmission to the terminal device at the first time domain resource location and the second time domain resource location, and the terminal device may receive the downlink transmission at the first time domain resource location and the second time domain resource location.

For example, the network device sends downlink transmission to the terminal device at the first time domain

18

resource location. After receiving the downlink transmission at the first time domain resource location and demodulating data carried in the downlink transmission, the terminal device may send, to the network device, feedback information indicating whether the downlink transmission is successfully demodulated. If the terminal device successfully demodulates the data carried in the downlink transmission at the first time domain resource location, the terminal device may send, to the network device, feedback information indicating that the downlink transmission is successfully demodulated. The network device determines, based on the received feedback information, not to send the downlink transmission at the second time domain resource location. In this case, the network device needs to send the downlink transmission only once at the first time domain resource location. Correspondingly, the terminal device receives the downlink transmission only at the first time domain resource location. If the terminal device fails to demodulate the data carried in the downlink transmission at the first time domain resource location, the terminal device may send, to the network device, feedback information indicating that the downlink transmission fails to be demodulated. The network device sends the downlink transmission to the terminal device at the second time domain resource location. Correspondingly, the terminal device receives the downlink transmission at the second time domain resource location, and demodulates the data carried in the downlink transmission. In this case, the network device sends the same downlink transmission at both the first time domain resource location and the second time domain resource location. Correspondingly, the terminal device receives the same downlink transmission at the first time domain resource location and the second time domain resource location, that is, the downlink transmission is transmitted twice, and the terminal device combines and demodulates the same downlink transmission, to improve demodulation performance.

If the network device detects that a channel at the first time domain resource location is relatively poor, the network device may not send downlink transmission at the first time domain resource location, but directly send downlink transmission to the terminal device at the second time domain resource location. In this case, the network device sends downlink transmission only at the second time domain resource location. Correspondingly, the terminal device can receive the downlink transmission only at the second time domain resource location. It may be understood that in this case, the terminal device may receive downlink transmission at the first time domain resource location, but because the network device does not send downlink transmission at the first time domain resource location, the terminal device cannot receive downlink transmission at the first time domain resource location.

For another example, the network device sends downlink transmission to the terminal device at the first time domain resource location. After receiving the downlink transmission at the first time domain resource location and demodulating the downlink transmission, the terminal device does not send, to the network device, feedback information indicating whether the downlink transmission is successfully demodulated. After sending the downlink transmission at the first time domain resource location, the network device sends the downlink transmission to the terminal device at the second time domain resource location. In this case, if the terminal device successfully demodulates the data carried in the downlink transmission at the first time domain resource location, the terminal device may not receive the downlink transmission sent by the network device at the second time domain resource location. If the terminal device fails to demodulate the data carried in the downlink transmission at the first time domain resource location, the terminal device receives the downlink transmission sent by the network device at the second time domain resource location. In this embodiment, the network device does not need to wait for the terminal device to send the feedback information indicating whether the downlink transmission is successfully demodulated, so that a transmission delay can be reduced, and transmission performance of downlink transmission can be improved.

It may be understood that sequence numbers of the foregoing processes do not mean an execution sequence in this embodiment. Optionally, S803 may be performed before S802, or may be performed after S802, or may be performed simultaneously with S802. The execution sequence of the processes should be determined according to functions and internal logic of the processes, and should not be construed as any limitation on the implementation processes of this embodiment.

When the downlink transmission carries downlink signaling required in an initial access procedure, the quantity of time units indicated by the interval information is a positive integer greater than or equal to 0. The downlink signaling of the initial access procedure carried in the downlink transmission includes but is not limited to SIB 1, SIB 19, and Msg4 in a random access procedure. The system information may also be other system information that carries ephemeris information.

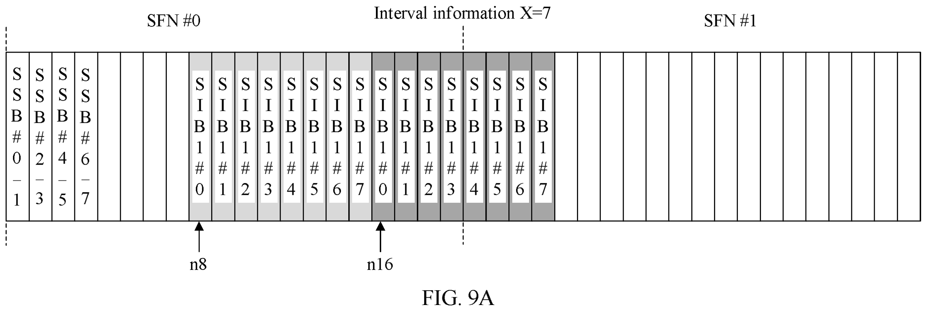

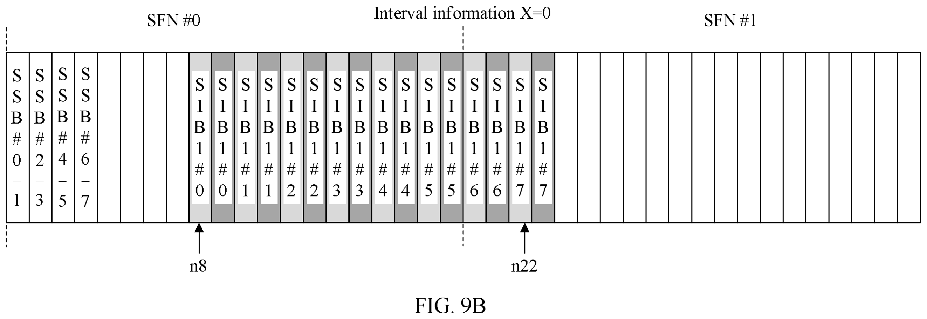

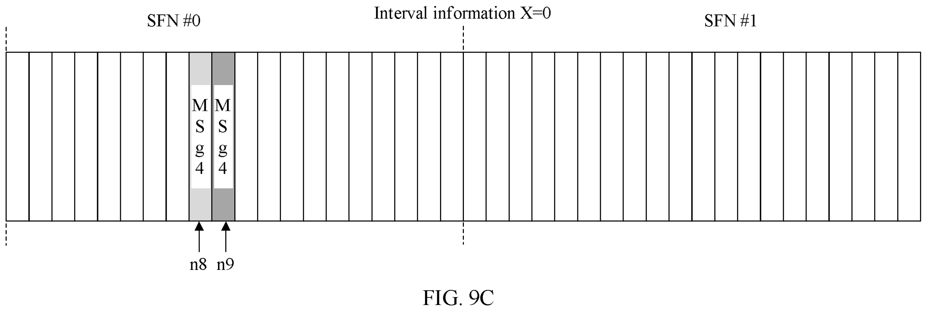

Referring to FIG. 9A, FIG. 9B, and FIG. 9C, FIG. 9A, FIG. 9B, and FIG. 9C are diagrams of a scenario of downlink transmission according to an embodiment of this application. Further, when downlink transmission carries SIB1, a quantity of time units indicated by interval information is a positive integer greater than 0. As shown in FIG. 9A, it is assumed that predefined interval information X=7. For a terminal device with an SSB #0, data carried in downlink transmission received by the terminal device is SIB1 (denoted as SIB1 #0), and a first time domain resource location corresponding to the SIB1 #0 for downlink transmission is a time unit n8. In this case, a quantity of time units between the first time domain resource location and a second time domain resource location is 7. Therefore, the second time domain resource location determined by the terminal device based on the interval information X=7 and the first time domain resource location (the time unit n8) is a time unit n16. As shown in FIG. 9A, the terminal device fails to demodulate, at the first time domain resource location (the time unit n8), downlink transmission carrying the SIB1 #0, and the terminal device receives the downlink transmission at the second time domain resource location (the time unit n16).

Optionally, as shown in FIG. 9A, it is assumed that predefined information Y=8. For a terminal device with an SSB #0, data carried in downlink transmission received by the terminal device is SIB1 (denoted as SIB1 #0), and a first time domain resource location corresponding to the SIB1 #0 for downlink transmission is a time unit n8. In this case, the second time domain resource location determined by the terminal device based on the information Y=8 and the first time domain resource location (the time unit n8) is a time unit n16(=n8+Y=8+8=n16). As shown in FIG. 9A, the terminal device fails to demodulate, at the first time domain resource location (the time unit n8), downlink transmission carrying the SIB1 #0, and the terminal device receives the downlink transmission at the second time domain resource location (the time unit n16).

As shown in FIG. 9A, when the SIB1 is carried in downlink transmission and the interval information X is a positive integer greater than 0, a plurality of time units between the first time domain resource location and the second time domain resource location may be used by other terminal devices (for example, terminal devices corresponding to the SSB #1 to the SSB #7) to receive corresponding downlink transmission, so that the terminal devices can have an occasion to access a network faster. When the first time of transmission and the second time of transmission of the SIB1 #0 are in two adjacent time units, that is, the interval information X=0, a terminal device of the SSB #7 can transmit, in a next time unit, downlink transmission that carries the SIB1 for the first time and that correspond to the SSB #7 only after the terminal device transmits the SIB1 twice corresponding to the SSB #0 to the SSB #6. As shown in FIG. 9B, the terminal device corresponding to the SSB #7 can receive the first time of downlink transmission of the SIB1 #7 only after 2*7=14 time units (that is, after 13 time units). As a result, duration for which the SIB 1 #7 corresponding to the SSB #7 needs to wait is increased, and a time for the terminal device corresponding to the SSB #7 to access a network is longer. It can be learned that when the interval information X between the first time domain resource location and the second time domain resource location of the SIB1 is greater than 0, downlink transmission in a same beam direction can be transmitted in consecutive time units, so that a terminal device having a good link budget (needing to demodulate data carried in only one time of downlink transmission) has an occasion to access the network earlier.

For example, when the downlink transmission carries the SIB19 in the initial access procedure or the Msg4 in the random access procedure, the quantity of time units indicated by the interval information X is a positive integer greater than or equal to 0. As shown in FIG. 9C, for example, when downlink transmission carries Msg4, the downlink transmission may be transmitted in two adjacent time units in one periodicity, that is, a quantity of time units between the first time domain resource location and the second time domain resource location is equal to 0, thereby improving transmission performance of the downlink transmission, improving demodulation performance of the terminal device, and enabling the terminal device to access a network faster.

Further, there are a plurality of second time domain resource locations, the plurality of second time domain resource locations are different, and the interval information is further used to indicate a quantity of time units between two adjacent second time domain resource locations.

It may be understood that, after the value of the interval information X is determined, a quantity of time units between the first time domain resource location and an adjacent second time domain resource location is equal to a quantity of time units between any two adjacent second time domain resource locations.

For example, the network device may define a quantity of second time domain resource locations. Assuming that the start location of the first time domain resource location is n, the second time domain resource location may be determined based on n+mX+1, where both the start location n of the first time domain resource location and m may be defined by the network device, m may indicate a quantity of second time domain resource locations, and X is interval information, and may be defined by a protocol. For example, if m=1, the quantity of second time domain resource locations is equal to 1, downlink transmission has two transmission occasions, and time domain resource locations that the two transmission occasions are at are respectively a first time domain resource location n and a second time domain resource location n+X+1. If m=2, the quantity of second time domain resource locations is equal to 2, downlink transmission has three transmission occasions, and time domain resource locations that the three transmission occasions are at are respectively a first time domain resource location n, one second time domain resource location n+X+1, and another second time domain resource location n+2X+1.

In the solution provided in this application, when the data carried in the downlink transmission is not successfully demodulated at the first time domain resource location, there may be two downlink transmission opportunities in a same periodicity, that is, the terminal device may have two receiver opportunities. Compared with one downlink transmission opportunity, more downlink transmission opportunities can improve downlink coverage of downlink transmission. In addition, a plurality of second time domain resource locations may be included, so that downlink transmission has a plurality of transmission occasions in a same periodicity, and the terminal device may have a plurality of receivers, thereby improving an access success rate. The terminal device may combine demodulation results of a plurality of times of received downlink transmission, to improve demodulation performance for data carried in the downlink transmission, and improve a success rate of accessing a network by the terminal device. In addition, the interval information X between two time domain resource locations may be greater than 0, there may be at least one time unit between two adjacent transmission opportunities of downlink transmission, and the downlink transmission can be performed in at least one consecutive time unit, so that the terminal device can access the network more quickly.

A difference between the solution provided in this embodiment and the solution in the foregoing embodiment lies in: The interval information is added, and at least one second time domain resource location is indicated based on the interval information and the first time domain resource location. Optionally, each of the first time domain resource location and the second time domain resource location may occupy one or more time units. When the terminal device demodulates downlink transmission that occupies a plurality of time units, if each of the first time domain resource location and the second time domain resource location occupies a plurality of time units, the downlink transmission may be demodulated based on the plurality of occupied time units and demodulation parameters in the embodiment shown in FIG. 5.

Referring to FIG. 10, FIG. 10 is a diagram of interaction in still another communication method according to an embodiment of this application. As shown in FIG. 10, the communication method may include steps S1001 to S1006. Step S1001 is an optional step.

S1001: A terminal device sends request information to a network device, where the request information is used to request downlink enhancement. Correspondingly, the network device receives the request information sent by the terminal device.

After receiving the request information, the network device may identify the received request information, and determine to perform downlink enhancement on downlink transmission. The communication method may further include: The network device redefines a field in DCI, to configure indication information.

Optionally, the field in the DCI may be an MCS field, another field in the DCI, or a field added to another field in the DCI, to configure the indication information.

When determining that the link budget is insufficient, the terminal device may send the request information to the network device, so that the network device may determine a plurality of time domain resource locations at which downlink transmission needs to be sent, and may indicate that the plurality of time domain resource locations are consecutive, and the terminal device can access a network faster.

For example, the request information may be carried in uplink transmission. For example, when the downlink transmission carries Msg4, the terminal device may include request information for downlink enhancement of the Msg4 into a message 3 (message 3, Msg3) carried in the uplink transmission. The network device identifies the request information for downlink enhancement in the Msg3, and configures a repetition count of downlink transmission in one periodicity by using DCI.

Optionally, the terminal device may include request information for subsequent downlink signaling enhancement into a message 5 (message 5, Msg5) carried in the uplink transmission. The network device identifies the request information for downlink enhancement in the Msg5, and configures a repetition count of downlink transmission in one periodicity by using DCI.

Optionally, the terminal device may request uplink enhancement of the Msg3 or the Msg5, and indicate that downlink enhancement needs to be performed. The network device identifies the request information for uplink enhancement of the Msg3 or the Msg5, determines that the terminal device also needs to perform downlink enhancement, and configures a repetition count of downlink transmission in a periodicity by using DCI.

The repetition count of downlink transmission in one periodicity by using DCI may be configured by redefining a field in the DCI, or by adding a configuration of downlink repeated transmission to the DCI.

Optionally, the Msg3 may be RRCSetupRequest signaling in a random access procedure. Optionally, the Msg4 may be RRCSetup signaling in a random access procedure. Optionally, the Msg5 may be RRCSetupComplete signaling in a random access procedure.

For example, the network device may further set an indication indicating whether to perform downlink enhancement, and determine whether to perform downlink enhancement in an initial access procedure. For example, the network device indicates, according to the signaling, whether to perform downlink enhancement. When the signaling indication is "0", it indicates that the downlink enhancement is not performed. When the signaling indication is "1", it indicates that the downlink enhancement is performed.

For example, when the terminal device sends the request information to the network device, if the repetition count of downlink transmission in one periodicity is greater than or equal to 1, the network device may determine that a start location and a time domain resource location are consecutive, to improve demodulation performance of the terminal device, so that the terminal device can access a network faster.

S1002. The network device sends indication information to the terminal device, where the indication information includes a repetition count of downlink transmission in one periodicity. Correspondingly, the terminal device receives the indication information from the network device.

It may be understood that for specific descriptions of step S1002, refer to step S401. Details are not described again.

An implementation of the indication information may correspond to the third possible implementation of the indication information in step S401. To be specific, the indication information includes the repetition count of the downlink transmission in one periodicity, and the repetition count of the downlink transmission in one periodicity is determined based on a field in DCI. Alternatively, the indication information is a first value, the first value is determined based on a first bit of a field in DCI, the first value indicates a target repetition count in a repetition count set, and the repetition count set includes a plurality of repetition counts of the downlink transmission in one periodicity.

It may be understood that when the terminal device does not send the request information to the network device, if the repetition count of downlink transmission in one periodicity is greater than or equal to 1, the network device may also determine that the start location and the time domain resource location are consecutive, to improve demodulation performance of the terminal device, so that the terminal device can access the network faster.

For example, the field in the DCI is an MCS field. Because the downlink budget is limited, the demodulation performance of the terminal device needs to be improved in a manner such as repetition, or code rate reduction. Therefore, the MCS field in the DCI indicates a low-order MCS, or a quantity of required bits is correspondingly reduced based on a limited MCS order available in the link budget, and a high-order bit is always in a state of 0. Therefore, the MCS field may be redefined to indicate a repetition count of downlink transmission in one periodicity.

The repetition count of downlink transmission in one periodicity is determined based on the field in the DCI, and the repetition count of downlink transmission in one periodicity may be directly indicated in the MCS field in the DCI. For example, two bits of the MCS field in the DCI are used to indicate the repetition count. When the two bits of the MCS field in the DCI are 00, the repetition count of downlink transmission in one periodicity is 0, which may indicate that the total quantity of transmission times of downlink transmission is 1. In other words, there is no repetition transmission occasion for the downlink transmission. When the two bits of the MCS field in the DCI are 01, the repetition count of downlink transmission in one periodicity is 1, which may indicate that the total quantity of transmission times of downlink transmission is 2. In other words, there is one repetition transmission opportunity for the downlink transmission. When the two bits of the MCS field in the DCI are 10, the repetition count of downlink transmission in one periodicity is 2, which may indicate that the total quantity of transmission times of downlink transmission is 3. In other words, there are two repetition transmission opportunities for the downlink transmission. When the two bits of the MCS field in the DCI are 11, the repetition count of downlink transmission in one periodicity is 3, which may indicate that the total quantity of transmission times of downlink transmission is 4. In other words, there are three repetition transmission opportunities for the downlink transmission.

In a possible implementation, the indication information is a first value, the first value is determined based on a first bit of the field in the DCI, the repetition count set may be determined based on a transmission quantity set defined by the network device, and the transmission quantity set is not limited. The first bit may be two bits or one bit. This is not limited in this application. For example, the network device may define the transmission quantity set as {1, 2, 4, 8}, indicating that the repetition count set is {0, 1, 3, 7}, and "1", "2", "4", and "8" in the transmission quantity set respectively indicate quantities of transmission times of downlink transmission in one periodicity. The first bit may be two bits. When the first bit is 00, the first value is 0, to indicate the first transmission quantity in the transmission quantity set, being "1" in the transmission quantity set. In other words, "1" in the transmission quantity set is the target transmission quantity. When the first bit is 01, the first value is 1, to indicate the second transmission quantity in the transmission quantity set, being "2" in the transmission quantity set. In other words, "2" in the transmission quantity set is the target transmission quantity. When the first bit is 10, the first value is 2, to indicate the third transmission quantity in the transmission quantity set, being "3" in the transmission quantity set. In other words, "3" in the transmission quantity set is the target transmission quantity. When the first bit is 11, the first value is 3, to indicate the fourth transmission quantity in the transmission quantity set, being "7" in the transmission quantity set. In other words, "7" in the transmission quantity set is the target transmission quantity.

"0", "1", "3", and "7" in the repetition count set respectively indicate repetition counts of downlink transmission in one periodicity. The first bit may be two bits. When the first bit is 00, the first value is 0, to indicate the first repetition count in the repetition count set, being "0" in the repetition count set. In other words, "0" in the repetition count set is the target repetition count. When the first bit is 01, the first value is 1, to indicate the second repetition count in the repetition count set, being "1" in the repetition count set. In other words, "1" in the repetition count set is the target repetition count. When the first bit is 10, the first value is 2, to indicate the third repetition count in the repetition count set, being "3" in the repetition count set. In other words, "3" in the repetition count set is the target repetition count. When the first bit is 11, the first value is 3, to indicate the fourth repetition count in the repetition count set, being "7" in the repetition count set. In other words, "7" in the repetition count set is the target repetition count.

It may be understood that the network device may send the DCI to the terminal device. Correspondingly, the terminal device may receive the DCI from the network device, and interpret the MCS field in the DCI to obtain a repetition count of downlink transmission in one periodicity. Alternatively, the terminal device may interpret the MCS field in the DCI to obtain the first value, and select the target repetition count from the repetition count set based on the first value.

S1003. The network device sends a start location of a time domain resource for downlink transmission to the terminal device. Correspondingly, the terminal device receives the start location of the time domain resource for the downlink transmission.

It may be understood that for specific descriptions of step S1003, refer to step S502. Details are not described again.

S1004. The network device determines, based on the start location and the repetition count of the downlink transmission in one periodicity, time domain resource locations for sending the downlink transmission.

After sending the start location and the repetition count of the downlink transmission in one periodicity to the terminal device, the network device may determine the time domain resource locations based on the start location and the repetition count of the downlink transmission in one periodicity.

S1005. The terminal device determines, based on the start location and the repetition count of the downlink transmission in one periodicity, time domain resource locations for receiving the downlink transmission.

After receiving the start location and the repetition count of the downlink transmission in one periodicity that are sent by the network device, the terminal device may determine the time domain resource locations based on the start location and the repetition count of the downlink transmission in one periodicity.

Optionally, after the network device determines the start location of the time domain resource for downlink transmission, the network device determines the time domain resource locations based on the start location and the repetition count of the downlink transmission in one periodicity. After determining the time domain resource locations, the network device sends the start location and the time domain resource locations to the terminal device. In other words, the terminal device does not need to determine the time domain resource locations based on the start location and the repetition count of the downlink transmission in one periodicity.

For example, if the start location is a time unit n3, and the repetition count of downlink transmission in one periodicity is equal to 2, the time domain resource locations may be the start location (the time unit n3), a time domain resource location that a time unit n4 is at, and a time domain resource location that a time unit n5 is at.

S1006. The network device sends the downlink transmission at the time domain resource locations. Correspondingly, the terminal device receives the downlink transmission at the time domain resource locations.

For example, if the start location is a time unit n3, and the repetition count of downlink transmission in one periodicity is equal to 2, the time domain resource locations determined by the network device may be a time unit n4 and a time unit n5, and the network device may send the downlink transmission at the start location (the time unit n3), a time domain resource location that a time unit n4 is at, and a time domain resource location that a time unit n5 is at. Correspondingly, the time domain resource locations determined by the terminal device are the time unit n4 and the time unit n5, and the terminal device may receive the downlink transmission at the start location (the time unit n3), the time domain resource location that a time unit n4 is at, and the time domain resource location that a time unit n5 is at.

It may be understood that when the repetition count of downlink transmission in one periodicity is greater than or equal to 1, the terminal device first receives one time of downlink transmission at the start location. If the terminal device successfully demodulates, at the start location, the data carried in the downlink transmission, the terminal device does not need to receive the downlink transmission at the determined time domain resource location. If the data carried in the downlink transmission is received at the start location but is not successfully demodulated, the downlink transmission is received at a next time domain resource location.

It may be understood that when the terminal device receives a plurality of times of downlink transmission, the terminal device may perform demodulation at corresponding time domain resource locations, and combine a plurality of demodulation results, to improve demodulation performance and improve transmission performance of downlink transmission.

It may be understood that sequence numbers of the foregoing processes do not mean an execution sequence in this embodiment. For example, step S1004 may be performed before S1005, or may be performed after S1005, or may be performed simultaneously with S1005. The execution sequence of the processes should be determined according to functions and internal logic of the processes, and should not be construed as any limitation on the implementation processes of this embodiment.

In this embodiment, an indication of a repetition count of downlink transmission in one periodicity is added to DCI. In one periodicity, a plurality of time domain resource locations of downlink transmission can be determined based on the repetition count and the start location of the downlink transmission, so that the downlink transmission can be performed at the plurality of time domain resource locations, and the terminal device can have a plurality of opportunities to receive the downlink transmission, thereby improving an access success rate.

In this embodiment, an indication of a repetition count of downlink transmission in one periodicity is added to a field of DCI. In one periodicity, a plurality of time domain resource locations of downlink transmission can be determined based on the repetition count and the start location of the downlink transmission, so that the downlink transmission can be performed at the plurality of time domain resource locations, and the terminal device can have a plurality of opportunities to receive the downlink transmission, thereby improving an access success rate.

A difference between the solution provided in this embodiment and the solution in the foregoing embodiment lies in: In this embodiment, an indication of a repetition count of downlink transmission in one periodicity is added to an MCS field.

Referring to FIG. 11, FIG. 11 is a diagram of interaction in still another communication method according to an embodiment of this application. The communication method may further include steps S1101 to S1106. Step S1101 is optional.

S1101: A terminal device sends request information to a network device, where the request information is used to request downlink enhancement. Correspondingly, the network device receives the request information sent by the terminal device.

After receiving the request information, the network device may identify the received request information, and determine to perform downlink enhancement on downlink transmission.

The communication method may further include: The network device redefines a field in DCI, to configure indication information.

Optionally, the field in the DCI may be an MCS field, another field in the DCI, or a field added to another field in the DCI, to configure the indication information.

When determining that the link budget is insufficient, the terminal device may send the request information to the network device, so that the network device may determine a plurality of time domain resource locations at which downlink transmission needs to be sent, and may indicate that the plurality of time domain resource locations are consecutive, and the terminal device can access a network faster.

Similarly, the request information may be carried in uplink transmission. For example, when the downlink transmission carries Msg4, the terminal device may include request information for downlink enhancement of the Msg4 into Msg3 carried in the uplink transmission. The network device identifies the request information for downlink enhancement in the Msg3, and redefines the field in the DCI to configure indication information (or configures indication information in the DCI), where the indication information indicates a repetition count of downlink transmission in one periodicity and a quantity of time units occupied by one time of downlink transmission.

Similarly, the request information may be carried in uplink transmission. For example, the terminal device may include request information for subsequent downlink enhancement into Msg5 carried in the uplink transmission. The network device identifies the request information for downlink enhancement in the Msg5, and redefines the field in the DCI to configure indication information (or configures indication information in the DCI), where the indication information indicates a repetition count of downlink transmission in one periodicity after the Msg5 and a quantity of time units occupied by one time of downlink transmission.

Similarly, the network device may further set an indication indicating whether to perform downlink enhancement, and determine whether to perform downlink enhancement in an initial access procedure. For example, the network device indicates, according to the signaling, whether to perform downlink enhancement. When the signaling indication is "0", it indicates that the downlink enhancement is performed. When the signaling indication is "1", it indicates that the downlink enhancement is performed.

For example, when the terminal device sends the request information to the network device, a plurality of time units occupied by one time of downlink transmission are consecutive; and/or if a repetition count of downlink transmission in one periodicity is greater than or equal to 1, time domain resource locations are consecutive. In this way, demodulation performance of the terminal device is improved, so that the terminal device can access a network faster.

S1102. The network device sends indication information to the terminal device, wherein the indication information includes a quantity of time units occupied by one time of downlink transmission and a repetition count of the downlink transmission in one periodicity. Correspondingly, the terminal device receives the indication information from the network device.

An implementation of the indication information may correspond to the fourth possible implementation of the indication information in step S401. To be specific, the indication information includes a repetition count of the downlink transmission in one periodicity and a quantity of time units occupied by one time of downlink transmission, and both the repetition count of the downlink transmission in one periodicity and the quantity of time units occupied by one time of downlink transmission are determined based on a field in DCI.

It may be understood that when the terminal device does not send the request information to the network device, the network device may also determine that the plurality of time units occupied by one time of downlink transmission are consecutive; and/or if the repetition count of downlink transmission in one periodicity is greater than or equal to 1, the network device may also determine that the start location and the time domain resource location are consecutive, to improve demodulation performance of the terminal device, so that the terminal device can access the network more quickly.

It may be understood that, for specific descriptions of the indication of the repetition count of the downlink transmission in one periodicity in the field in the DCI, refer to the descriptions of step S1001. Details are not described herein again.

The quantity of time units occupied by one time of the downlink transmission is determined based on the field in the DCI. The quantity of time units occupied by one time of downlink transmission may be directly indicated by two or more bits in the field in the DCI. For example, the quantity of time units occupied by one time of downlink transmission is indicated by using two bits in the field in the DCI. The bits may be set to "00", "01", "10", or "11", and the corresponding quantities of time units occupied by one time of downlink transmission are respectively "0", "1", "2", and "3".

Optionally, the field in the DCI may be an MCS field.

In a possible implementation, the indication information is a second value, the second value is determined based on a second bit of the MCS field in the DCI, the second value indicates a target time unit quantity in a time unit quantity set, and the time unit quantity set comprises a plurality of quantities of time units occupied by one time of the downlink transmission. The time unit quantity set may be defined by the network device, and the time unit quantity set is not limited. The second bit may be one bit, or may be two bits. This is not limited in this application. For example, the time unit quantity set is {2, 8}, each of "2" and "8" in the time unit quantity set indicates a quantity of time units occupied by one time of downlink transmission, and the second bit may be one bit. When the second bit is 0, the second value is 0, indicating the first time unit quantity in the time unit quantity set, being "2" in the time unit quantity set. In other words, "2" in the time unit quantity set is the target time unit quantity. When the second bit is 1, the second value is 1, indicating the second time unit quantity in the time unit quantity set, being "8" in the time unit quantity set. In other words, "8" in the time unit quantity set is the target time unit quantity.

It may be understood that the network device may send the DCI to the terminal device. Correspondingly, the terminal device may receive the DCI from the network device, and interpret the MCS field in the DCI to obtain a quantity of time units occupied by one time of downlink transmission and a repetition count of the downlink transmission in one periodicity. Alternatively, the terminal device may interpret the MCS field in the DCI to obtain the first value and the second value, select the target repetition count from the repetition count set based on the first value, and select the target time quantity unit from the plurality of time unit quantity sets based on the second value.

In a possible implementation, the indication information may further correspond to the fifth possible implementation of the indication information in step S401. To be specific, the indication information includes the quantity of time units occupied by one time of the downlink transmission and the repetition count of the downlink transmission in one periodicity, and the indication information is carried in DCI. Alternatively, the indication information is a third value, the indication information indicates a target candidate set of the plurality of candidate sets, and the indication information is carried in DCI, where the candidate sets are carried in configuration information of the network device, the configuration information includes a plurality of candidate sets, and each of the plurality of candidate sets corresponds to a group of the quantity of time units occupied by one time of the downlink transmission and the repetition count of the downlink transmission in one periodicity.

The indication information corresponding to the repetition count of downlink transmission in one periodicity and the quantity of time units occupied by one time of downlink transmission may be carried in a reserved bit in a DCI format 1_0. The terminal device determines, based on the indication information in the DCI format 1_0, the quantity of time units occupied by one time of downlink transmission and the repetition count of downlink transmission in one periodicity.

In a possible implementation, a plurality of candidate sets may be predefined, a third value is determined by using a reserved bit in the DCI format 1_0, and a group of a quantity of time units occupied by one time of downlink transmission and a repetition count of downlink transmission in one periodicity is selected from the plurality of candidate sets based on the third value, that is, a target candidate set is selected. The configuration information including the plurality of candidate sets may be configured by the network device, may be configured by using RRC signaling, or may be configured by including a candidate set to a PDSCH-TimeDomainResourceAllocation parameter in the SIB1. It may be understood that the network device may send the configuration information to the terminal device, and correspondingly, the terminal device receives the configuration information from the network device, to determine the indication information.

In an embodiment, a plurality of candidate sets may form a configuration to-be-selected set. The configuration to-be-selected set may be {{2, 2}, {2, 4}, {4, 8}, {8, 2}}, where "{2, 2}", "{2, 4}", "{4, 8}", and "{8, 2}" are candidate sets. A first value in a candidate set is a quantity of time units occupied by one time of downlink transmission, and a second value in the candidate set is a repetition count of downlink transmission in one periodicity. For example, the candidate set "{2, 4}" indicates that a quantity of time units occupied by one time of downlink transmission is 2, and a repetition count of downlink transmission in one periodicity is 4. The third value may be indicated by two reserved bits in the DCI. When the two reserved bits are 00, the third value is 0, indicating that the first candidate set in the configuration to-be-selected set is "{2, 2}". In other words, "{2, 2}" in the configuration to-be-selected set is the target candidate set. When the two reserved bits are 01, the third value is 1, indicating that the second candidate set in the configuration to-be-selected set is "{2, 4}". In other words, "{2, 4}" in the configuration to-be-selected set is the target candidate set. When the two reserved bits are 10, the third value is 2, indicating that the third candidate set in the configuration to-be-selected set is "{4, 8}". In other words, "{4, 8}" in the configuration to-be-selected set is the target candidate set. When the two reserved bits are 11, the third value is 3, indicating that the fourth candidate set in the configuration to-be-selected set is "{8, 2}". In other words, "{8, 2}" in the configuration to-be-selected set is the target candidate set.

It may be understood that the network device may send the DCI to the terminal device. Correspondingly, the terminal device may receive the DCI from the network device, and interpret the DCI to obtain a quantity of time units occupied by one time of downlink transmission and a repetition count of the downlink transmission in one periodicity. Alternatively, the terminal device may interpret the DCI to obtain the third value, and select the target candidate set from the plurality of candidate sets based on the third value.

S1103. The network device sends a start location of a time domain resource for downlink transmission to the terminal device. Correspondingly, the terminal device receives the start location of the time domain resource for the downlink transmission.

It may be understood that for specific descriptions of step S1103, refer to step S502.

S1104: The network device determines, based on the start location, the quantity of time units occupied by one time of the downlink transmission, and the repetition count of the downlink transmission in one periodicity, time domain resource locations for sending the downlink transmission.

After sending the start location, the quantity of time units occupied by one time of the downlink transmission, and the repetition count of the downlink transmission in one periodicity to the terminal device, the network device may determine the time domain resource locations for the downlink transmission based on the start location, the quantity of time units occupied by one time of the downlink transmission, and the repetition count of the downlink transmission in one periodicity.

S1105. The terminal device determines, based on the start location, the quantity of time units occupied by one time of the downlink transmission, and the repetition count of the downlink transmission in one periodicity, time domain resource locations for receiving the downlink transmission.

After receiving the start location, the quantity of time units occupied by one time of the downlink transmission, and the repetition count of the downlink transmission in one periodicity that are sent by the network device, the terminal device may determine the time domain resource locations for the downlink transmission based on the start location, the quantity of time units occupied by one time of the downlink transmission, and the repetition count of the downlink transmission in one periodicity.

Optionally, after the network device determines the start location of the time domain resource for downlink transmission, the network device determines the time domain resource locations based on the start location, the quantity of time units occupied by one time of the downlink transmission, and the repetition count of the downlink transmission in one periodicity. After determining the time domain resource locations, the network device sends the start location and the time domain resource locations to the terminal device. In other words, the terminal device does not need to determine the time domain resource locations based on the start location, the quantity of time units occupied by one time of the downlink transmission, and the repetition count of the downlink transmission in one periodicity.

For example, if the start location is a time unit n3, a quantity of time units occupied by one time of downlink transmission is 2, and a repetition count of the downlink transmission in one periodicity is equal to 2, indicating that a total quantity of times of downlink transmission is 3, first time domain resource locations determined by the terminal device may be the time unit n3 and a time unit n4, second time domain resource locations determined by the terminal device may be a time unit n5 and a time unit n6, and third time domain resource locations determined by the terminal device may be a time unit n7 and a time unit n8.

S1106. The network device sends the downlink transmission at the time domain resource locations. Correspondingly, the terminal device receives the downlink transmission at the time domain resource locations.

For example, the network device may send one or more times of downlink transmission at the three determined time domain resource locations, and correspondingly, the terminal device may receive one or more times of downlink transmission at the three determined time domain resource locations.

It may be understood that when the terminal device receives a plurality of times of downlink transmission, the terminal device may perform demodulation at corresponding time domain resource locations, and combine a plurality of demodulation results, to improve demodulation performance of the terminal device and improve transmission performance of downlink transmission.

It may be understood that, when one time of downlink transmission occupies a plurality of time units, a quantity of information bits of a quantity of time units occupied by one time of downlink transmission may be adjusted in the first possible implementation, to improve demodulation performance of the terminal device.

It may be understood that sequence numbers of the foregoing processes do not mean an execution sequence in this embodiment. For example, step S1104 may be performed before S1105, or may be performed after S1105, or may be performed simultaneously with S1105. The execution sequence of the processes should be determined according to functions and internal logic of the processes, and should not be construed as any limitation on the implementation processes of this embodiment.

In the solution provided in this application, the indication of the quantity of time units occupied by one time of downlink transmission and the indication of the repetition count of downlink transmission in one periodicity are added to the MCS domain, or the indication of the quantity of time units occupied by one time of downlink transmission and the indication of the repetition count of downlink transmission in one periodicity are directly added to the DCI, time domain resource locations at which a plurality of time units are occupied are determined based on a start location of downlink transmission, the quantity of time units occupied by one time of downlink transmission, and the repetition count of downlink transmission in one periodicity, and the terminal device can have a plurality of opportunities to receive downlink transmission, to increase a quantity of bits that can be transmitted in one time of downlink transmission, and improve downlink coverage of downlink transmission.

A difference between the solution provided in this embodiment and the solution in the foregoing embodiment lies in: In this embodiment, the indication of the quantity of time units occupied by one time of downlink transmission and the indication of the repetition count of downlink transmission in one periodicity are added to the MCS domain or the DCI. When the terminal device demodulates downlink transmission that occupies a plurality of time units, the downlink transmission may be demodulated based on the quantity of time units occupied by one time of downlink transmission and demodulation parameters in the embodiment shown in FIG. 5.

The foregoing describes the method embodiments provided in embodiments of this application. The following describes apparatus embodiments in embodiments of this application.

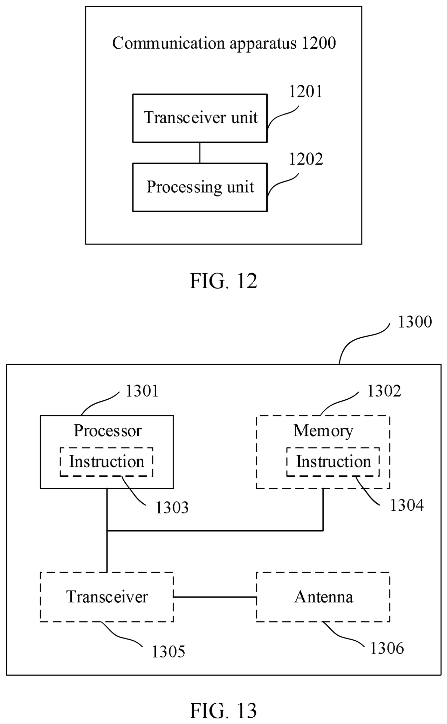

Referring to FIG. 12, FIG. 12 is a diagram of a structure of a communication apparatus according to an embodiment of this application. The communication apparatus may be a terminal device, or may be an apparatus (for example, a chip, a chip system, or a circuit) in a terminal device. As shown in FIG. 12, the communication apparatus 1200 includes at least a transceiver unit 1201 and a processing unit 1202.

The transceiver unit 1201 is configured to receive indication information from a network device, wherein the indication information is used to indicate a quantity of time units occupied by one time of downlink transmission and/or a repetition count of the downlink transmission in one periodicity, and the quantity of time units occupied by one time of the downlink transmission is a positive integer greater than 1; and

the transceiver unit 1201 is further configured to receive the downlink transmission from the network device based on the indication information.

The transceiver unit 1201 is further configured to perform information from outside of the communication apparatus 1200, for example, perform a receiving or sending step of the terminal device in the embodiments shown in FIG. 5, FIG. 8, FIG. 10, and FIG. 11. The processing unit 1202 is configured to perform processing steps such as a determining step, an interpretation step, and a demodulation step of the terminal device in the embodiments shown in FIG. 5, FIG. 8, FIG. 10, and FIG. 11.

The communication apparatus shown in FIG. 12 may be a network device, or an apparatus (for example, a chip, a chip system, or a circuit) in a network device. As shown in FIG. 12, the communication apparatus 1200 includes at least a transceiver unit 1201 and a processing unit 1202.

The transceiver unit 1201 is configured to send indication information to a terminal device, wherein the indication information is used to indicate a quantity of time units occupied by one time of downlink transmission and/or a repetition count of the downlink transmission in one periodicity, and the quantity of time units occupied by one time of the downlink transmission is a positive integer greater than 1.

The transceiver unit 1201 is further configured to send the downlink transmission to the terminal device based on the indication information.

The transceiver unit 1201 is further configured to perform information from outside of the communication apparatus 1200, for example, perform a receiving or sending step of the network device in the embodiments shown in FIG. 5, FIG. 8, FIG. 10, and FIG. 11. The processing unit 1202 is configured to perform processing steps such as a determining step, an identification step, and a redefinition step of the network device in the embodiments shown in FIG. 5, FIG. 8, FIG. 10, and FIG. 11.

Based on the foregoing network architecture, referring to FIG. 13, FIG. 13 is a diagram of a structure of another communication apparatus according to an embodiment of this application. As shown in FIG. 13, the apparatus 1300 may include one or more processors 1301. The processor 1301 may also be referred to as a processing unit, and may implement a specific control function. The processor 1301 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 1301 may also store an instruction 1303 and/or data, and the instruction 1303 and/or the data may be run by the processor, to cause the apparatus 1300 to perform the method described in the foregoing method embodiments.

In another optional design, the processor 1301 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1300 may include a circuit, and the circuit may implement the sending, receiving, or communication function in the foregoing method embodiments.

Optionally, the apparatus 1300 may include one or more memories 1302, on which an instruction 1304 and/or data may be stored. The instruction 1304 and/or the data may be run on the processor, to cause the apparatus 1300 to perform the method described in the foregoing method embodiments. Optionally, the memory may further store data. Optionally, the processor may also store an instruction and/or data. The processor and the memory may be separately disposed, or may be integrated together. For example, the correspondence described in the foregoing method embodiment may be stored in the memory or stored in the processor.

Optionally, the apparatus 1300 may further include a transceiver 1305 and/or an antenna 1306. The processor 1301 may be referred to as a processing unit, and control the apparatus 1300. The transceiver 1305 may be referred to as a transceiver unit, a transceiver circuit, a transceiver apparatus, a transceiver module, or the like, and is configured to implement sending and receiving functions.

Optionally, the apparatus 1300 in this embodiment of this application may be configured to perform the method described in FIG. 4 to FIG. 11 in embodiments of this application.

In an implementation, the communication apparatus 1300 may be a terminal device, or an apparatus (for example, a chip, a chip system, or a circuit) in a terminal device, or the communication apparatus 1300 may be a network device, or an apparatus (for example, a chip, a chip system, or a circuit) in a network device. When the computer program instruction stored in the memory 1302 is executed, the processor 1301 is configured to perform an operation performed by the processing unit 1202 in the foregoing embodiment, the transceiver 1305 is configured to perform an operation performed by the transceiver unit 1201 in the foregoing embodiment, and the transceiver 1305 is further configured to send information to another communication apparatus other than the communication apparatus. The terminal device or the apparatus in the terminal device may be further configured to perform various methods performed by the terminal device in the method embodiments in FIG. 4 to FIG. 11. Details are not described again. The network device or the apparatus in the network device may be further configured to perform various methods performed by the network device in the method embodiments in FIG. 4 to FIG. 11. Details are not described again.

The apparatus described in the foregoing embodiments may be a first communication device or a second communication device. However, a range of the apparatus described in this application is not limited thereto, and a structure of the apparatus may not be limited to FIG. 13. The apparatus may be an independent device, or may be a part of a larger device. For example, the apparatus may be:

(1) an independent integrated circuit IC, a chip, a chip system, or a subsystem;
(2) a set of one or more ICs, where optionally, the IC set may also include a storage component configured to store data and/or an instruction;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

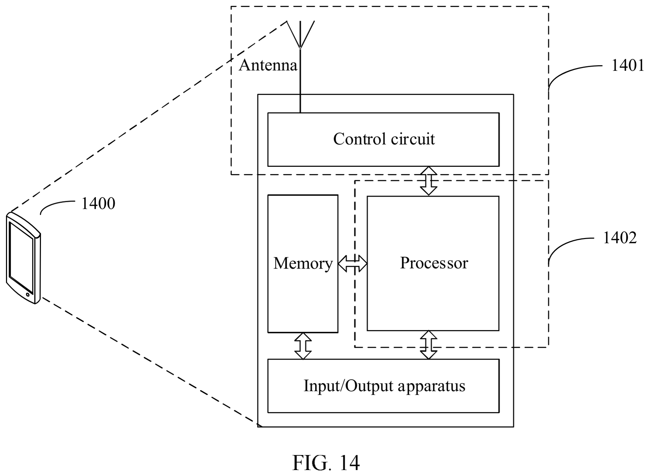

Referring to FIG. 14, FIG. 14 is a schematic structural diagram of another terminal device according to an embodiment of this application. For ease of description, FIG. 14 shows only main components of the terminal device. As shown in FIG. 14, the terminal device 1400 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal is powered on, the processor may read the software program in the storage unit, interpret and execute an instruction of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 14 shows only one memory and one processor. In an actual terminal, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data, and the central processing unit is mainly configured to: control the entire terminal, execute a software program, and process data of the software program. The processor in FIG. 14 integrates functions of the baseband processor and the central processing unit. A person skilled in the art may understand that the baseband processor and the central processing unit may alternatively be separate processors, and are interconnected by using a technology such as a bus. Persons skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit 1401 of the terminal device 1400, and the processor having a processing function may be considered as a processing unit 1402 of the terminal device 1400. As shown in FIG. 14, the terminal device 1400 includes the transceiver unit 1401 and the processing unit 1402. The transceiver unit may also be referred to as a transceiver, a transceiver machine, a transceiver apparatus, or the like. Optionally, a component configured to implement the receiving function in the transceiver unit 1401 may be considered as a receiving unit, and a component configured to implement the sending function in the transceiver unit 1401 may be considered as a sending unit. That is, the transceiver unit 1401 includes the receiving unit and the sending unit. For example, the receiving unit may also be referred to as a receiver, a receiving machine, or a receiving circuit, and the sending unit may also be referred to as a transmitter, a transmitting machine, or a transmitting circuit. Optionally, the receiving unit and the sending unit may be one integrated unit, or may be a plurality of independent units. The receiving unit and the sending unit may be in one geographical location, or may be distributed in a plurality of geographical locations.

In an implementation, the processing unit 1402 is configured to perform an operation performed by the processing unit 1202 in the foregoing embodiment, and the transceiver unit 1401 is configured to perform an operation performed by the transceiver unit 1201 in the foregoing embodiment. The terminal device 1400 may be further configured to perform various methods performed by the terminal device in the method embodiments in FIG. 4 to FIG. 11. Details are not described again.

An embodiment of this application further provides a computer-readable storage medium, and the computer-readable storage medium stores a computer program. When the program is executed by a processor, a procedure related to the terminal device in the communication method provided in the foregoing method embodiments may be implemented.

An embodiment of this application further provides a computer-readable storage medium, and the computer-readable storage medium stores a computer program. When the program is executed by a processor, a procedure related to the network device in the transmission mode determining method provided in the foregoing method embodiments may be implemented.

An embodiment of this application further provides a computer program product. When the computer program product runs on a computer or a processor, the computer or the processor is enabled to perform one or more steps in any one of the foregoing transmission mode determining methods. When the foregoing modules in the device are implemented in a form of a software functional unit and sold or used as an independent product, the modules may be stored in a computer-readable storage medium.

An embodiment of this application further provides a chip system, including at least one processor. The at least one processor is configured to run a computer program or an instruction, to perform some or all of the steps recorded in any one of the method embodiments corresponding to FIG. 4 to FIG. 11. The chip system may include a chip, or may include a chip and another discrete component. Optionally, the chip system may include a communication interface, and the communication interface and the at least one processor are interconnected by using a line.

An embodiment of this application further discloses a communication system, and the system includes a terminal device and a network device. For specific descriptions, refer to the transmission mode determining methods shown in FIG. 4 to FIG. 11.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instruction and/or the data.

It should be further understood that the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type. It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, comprising:

   receiving indication information from a network device, wherein the indication information indicates a quantity of time units occupied by one time of downlink transmission and/or a repetition count of the downlink transmission in one periodicity, and the quantity of time units occupied by one time of the downlink transmission is a positive integer greater than 1; and
   receiving the downlink transmission from the network device based on the indication information.

2. The method according to claim 1, wherein the indication information comprises the quantity of time units occupied by one time of the downlink transmission; and
   the receiving the downlink transmission from the network device based on the indication information comprises:

   receiving a start location of a time domain resource for the downlink transmission;
   determining, based on the start location and the quantity of time units occupied by one time of the downlink transmission, time domain resource locations for receiving the downlink transmission; and
   receiving the downlink transmission at the time domain resource locations.

3. The method according to claim 1, wherein the indication information comprises a first time domain resource location for the downlink transmission; and the method further comprises:

   determining, based on the first time domain resource location and interval information, a second time domain resource location for receiving the downlink transmission, wherein the interval information indicates a quantity of time units between the first time domain resource location and the adjacent second time domain resource location; and
   the receiving the downlink transmission from the network device based on the indication information comprises:
   receiving the downlink transmission at the first time domain resource location and/or the second time domain resource location.

4. The method according to claim 3, wherein when the downlink transmission carries downlink signaling in an initial access procedure, the quantity of time units indicated by the interval information is a positive integer greater than or equal to 0.

5. The method according to claim 4, wherein the downlink signaling of the initial access procedure carried in the downlink transmission comprises a system information block SIB1, a system information block SIB19, and a message Msg4 in a random access procedure; and when the downlink transmission carries the SIB1, the quantity of time units indicated by the interval information is a positive integer greater than 0.

6. The method according to claim 1, wherein the indication information comprises the repetition count of the downlink transmission in one periodicity, and the repetition count of the downlink transmission in one periodicity is determined based on a field in downlink control information DCI; or
the indication information is a first value, the first value is determined based on a first bit of a field in downlink control information DCI, the first value indicates a target repetition count in a repetition count set, and the repetition count set comprises a plurality of repetition counts of the downlink transmission in one periodicity.

7. The method according to claim 6, wherein the method further comprises:

receiving the DCI, and obtaining, based on the field in the DCI, the repetition count of the downlink transmission in one periodicity; and
the receiving the downlink transmission from the network device based on the indication information comprises:

receiving a start location of a time domain resource for the downlink transmission;
determining, based on the start location and the repetition count of the downlink transmission in one periodicity, time domain resource locations for receiving the downlink transmission; and
receiving the downlink transmission at the time domain resource locations.

8. The method according to claim 6 or 7, wherein the indication information further comprises the quantity of time units occupied by one time of the downlink transmission, and the quantity of time units occupied by one time of the downlink transmission is determined based on the field in the DCI; or
the indication information is a second value, the second value is determined based on a second bit of the field in the DCI, the second value indicates a target time unit quantity in a time unit quantity set, and the time unit quantity set comprises a plurality of quantities of time units occupied by one time of the downlink transmission.

9. The method according to claim 8, wherein the method further comprises:

receiving the DCI, and obtaining, based on the field in the DCI, the repetition count of the downlink transmission in one periodicity and the quantity of time units occupied by one time of the downlink transmission; and
the receiving the downlink transmission from the network device based on the indication information comprises:

receiving a start location of a time domain resource for the downlink transmission;
determining, based on the start location, the quantity of time units occupied by one time of the downlink transmission, and the repetition count of the downlink transmission in one periodicity, time domain resource locations for receiving the downlink transmission; and
receiving the downlink transmission at the time domain resource locations.

10. The method according to any one of claims 6 to 9, wherein the field in the DCI is a modulation and coding scheme MCS field.

11. The method according to claim 1, wherein the indication information comprises the quantity of time units occupied by one time of the downlink transmission and the repetition count of the downlink transmission in one periodicity, and the indication information is carried in downlink control information DCI; or the method further comprises:

receiving configuration information from the network device, wherein the configuration information comprises a plurality of candidate sets, and each of the plurality of candidate sets corresponds to a group of the quantity of time units occupied by one time of the downlink transmission and the repetition count of the downlink transmission in one periodicity; and
the indication information is a third value, the third value indicates a target candidate set of the plurality of candidate sets, and the indication information is carried in downlink control information DCI.

12. The method according to claim 11, wherein the method further comprises:

receiving the DCI, and determining, based on the DCI, the quantity of time units occupied by one time of the downlink transmission and the repetition count of the downlink transmission in one periodicity; and
the receiving the downlink transmission from the network device based on the indication information comprises:

receiving a start location of a time domain resource for the downlink transmission;
determining, based on the start location, the quantity of time units occupied by one time of the downlink transmission, and the repetition count of the downlink transmission in one periodicity, time domain resource locations for receiving the downlink transmission; and
receiving the downlink transmission at the time domain resource locations.

13. The method according to any one of claims 6 to 12, wherein the method further comprises:
sending request information to the network device, wherein the request information is used to request downlink enhancement.

14. The method according to any one of claims 8 to 13, wherein the plurality of time units occupied by one time of the downlink transmission are consecutive.

15. The method according to any one of claims 7 to 14, wherein when the repetition count of the downlink transmission in one periodicity is greater than or equal to 1, the time domain resource locations are consecutive.

16. A communication method, comprising:

sending indication information to a terminal device, wherein the indication information indicates a quantity of time units occupied by one time of downlink transmission and/or a repetition count of the downlink transmission in one periodicity, and the quantity of time units occupied by one time of the downlink transmission is a positive integer greater than 1; and
sending the downlink transmission to the terminal device based on the indication information.

17. The method according to claim 16, wherein the indication information comprises the quantity of time units occupied by one time of the downlink transmission; and
the sending the downlink transmission to the terminal device based on the indication information comprises:

determining a start location of time domain resource locations for the downlink transmission;
sending the start location to the terminal device;
determining, based on the start location and the quantity of time units occupied by one time of the downlink transmission, time domain resource locations for sending the downlink transmission; and
sending the downlink transmission at the time domain resource locations.

18. The method according to claim 16, wherein the indication information comprises a first time domain resource location for the downlink transmission; and the method further comprises:

determining, based on the first time domain resource location and interval information, a second time domain resource location for sending the downlink transmission, wherein the interval information indicates a quantity of time units between the first time domain resource location and the adjacent second time domain resource location; and
the sending the downlink transmission to the terminal device based on the indication information comprises:
sending the downlink transmission at the first time domain resource location and/or the second time domain resource location.

19. The method according to claim 16, wherein the method further comprises:

sending DCI, wherein a field in the DCI comprises indication information of the repetition count of the downlink transmission in one periodicity; and
the sending the downlink transmission to the terminal device based on the indication information comprises:

sending a start location of a time domain resource for the downlink transmission;
determining, based on the start location and the repetition count of the downlink transmission in one periodicity, time domain resource locations for sending the downlink transmission; and

sending the downlink transmission at the time domain resource locations.

20. The method according to claim 19, wherein the method further comprises:

sending the DCI, wherein the field in the DCI comprises indication information of the repetition count of the downlink transmission in one periodicity and the quantity of time units occupied by one time of downlink transmission; and
the sending the downlink transmission to the terminal device based on the indication information comprises:

determining the start location of the time domain resource for the downlink transmission;
sending the start location to the terminal device;
determining, based on the start location, the quantity of time units occupied by one time of the downlink transmission, and the repetition count of the downlink transmission in one periodicity, time domain resource locations for sending the downlink transmission; and
sending the downlink transmission at the time domain resource locations.

21. The method according to claim 19 or 20, wherein the field in the DCI is a modulation and coding scheme MCS field, and the method further comprises:
redefining the MCS field in the DCI.

22. The method according to claim 16, wherein the method further comprises:

sending DCI, wherein the DCI comprises the quantity of time units occupied by one time of the downlink transmission and the repetition count of the downlink transmission in one periodicity;
the sending the downlink transmission to the terminal device based on the indication information comprises:

determining the start location of the time domain resource for the downlink transmission;
sending the start location to the terminal device;
determining, based on the start location, the quantity of time units occupied by one time of the downlink transmission, and the repetition count of the downlink transmission in one periodicity, time domain resource locations for sending the downlink transmission; and
sending the downlink transmission at the time domain resource locations.

23. The method according to claim 22, wherein the method further comprises:
adding the indication information to the DCI.

24. The communication method according to any one of claims 20 to 23, wherein the method further comprises:
receiving request information of the terminal device, wherein the request information is used to request downlink enhancement.

25. A communication apparatus, comprising a unit configured to perform the method according to any one of claims 1 to 15.

26. A communication apparatus, comprising a unit configured to perform the method according to any one of claims 16 to 24.

27. A communication apparatus, comprising a processor, a memory, an input interface, and an output interface, wherein the input interface is configured to receive information from another communication apparatus other than the communication apparatus, and the output interface is configured to output information to the another communication apparatus other than the communication apparatus; and when a computer program stored in the memory is invoked by the processor, the method according to any one of claims 1 to 15 is implemented, or the method according to any one of claims 16 to 24 is implemented.

28. A computer-readable storage medium, wherein the computer-readable storage medium stores a computer program or a computer instruction; and when the computer program or the computer instruction is executed by a processor, the method according to any one of claims 1 to 15 is implemented, or the method according to any one of claims 16 to 24 is implemented.

29. A computer program product, wherein the computer program product comprises an instruction; and when the instruction is executed by a processor, the method according to any one of claims 1 to 15 is implemented, or the method according to any one of claims 16 to 24 is implemented.

30. A chip system, comprising at least one processor and a memory, wherein the memory and the at least one processor are interconnected by using a line, the at least one memory stores an instruction, and when the instruction is executed by the processor, the method according to any one of claims 1 to 15 is implemented, or the method according to any one of claims 16 to 24 is implemented.

FIG. 1

FIG. 2

RAN

Terminal
device

CN

Uu

NG

Satellite

SRI-based NG

NTN gateway

FIG. 3

| Network device | Terminal device |

S401. Indication information, where the indication
information indicates a quantity of time units occupied by
one time of downlink transmission and/or a repetition
count of the downlink transmission in one periodicity, and
the quantity of time units occupied by one time of the
downlink transmission is a positive integer greater than 1

S402. Send the downlink transmission based on the
indication information

FIG. 4

Network device

Terminal device

S501. Indication information, where the indication information indicates a quantity of time units occupied by one time of downlink transmission, and the quantity of time units occupied by one time of the downlink transmission is a positive integer greater than 1

S502. Start location of the time domain resource for the downlink transmission

S503. Determine time domain resource locations based on the start location and the quantity of time units occupied by one time of the downlink transmission

S504. Determine time domain resource locations based on the start location and the quantity of time units occupied by one time of the downlink transmission

S505. Send the downlink transmission at the time domain resource locations

FIG. 5

FIG. 6A

Quantity of time
units=4

| | |
|---|---|
| SSB #0–1 | |
| SSB #2–3 | |
| SSB #4–5 | |
| SSB #6–7 | |
| | SFN #0 |

n8 →

System information
#0

n11 →

SFN #1

FIG. 6B

Quantity of time
units=2

| |
|---|
| SSB #0–1 |
| SSB #2–3 |
| SSB #4–5 |
| SSB #6–7 |

SFN #0

n8 → System information #0

n9 →

← n10

n11 → System information #0

SFN #1

FIG. 7

Network device

Terminal device

S801. Indication information, where the indication information includes a first time domain resource location

S802. Determine, based on interval information and the first time domain resource location, a second time domain resource location for sending downlink transmission, where the interval information indicates a quantity of time units between the first time domain resource location and the adjacent second time domain resource location

S803. Determine, based on the interval information and the first time domain resource location, the second time domain resource location for receiving downlink transmission

S804. Send the downlink transmission at the first time domain resource location and/or the second time domain resource location

FIG. 8

SFN #0  Interval information X=7  SFN #1

| SSB #0_1 | SSB #2_3 | SSB #4_5 | SSB #6_7 | | | | | SIB1 #0 | SIB1 #1 | SIB1 #2 | SIB1 #3 | SIB1 #4 | SIB1 #5 | SIB1 #6 | SIB1 #7 | SIB1 #0 | SIB1 #1 | SIB1 #2 | SIB1 #3 | SIB1 #4 | SIB1 #5 | SIB1 #6 | SIB1 #7 |

n8    n16

FIG. 9A

EP 4 701 305 A1

SFN #0   Interval information X=0   SFN #1

| S S B # 0 – 1 | S S B # 2 – 3 | S S B # 4 – 5 | S S B # 6 – 7 | | | | | S I B 1 # 0 | S I B 1 # 0 | S I B 1 # 1 | S I B 1 # 1 | S I B 1 # 2 | S I B 1 # 2 | S I B 1 # 3 | S I B 1 # 3 | S I B 1 # 4 | S I B 1 # 4 | S I B 1 # 5 | S I B 1 # 5 | S I B 1 # 6 | S I B 1 # 6 | S I B 1 # 7 | S I B 1 # 7 |

n8      n22

FIG. 9B

Interval information X=0

SFN #1

SFN #0

Msg44

Msg44

n8  n9

FIG. 9C

Network device | Terminal device

S1001. Request information, where the request information is used to request downlink enhancement

S1002. Indication information, where the indication information includes a repetition count of downlink transmission in one periodicity

S1003. Start location of a time domain resource for the downlink transmission

S1004. Determine time domain resource locations based on the start location and the repetition count of the downlink transmission in one periodicity

S1005. Determine time domain resource locations based on the start location and the repetition count of the downlink transmission in one periodicity

S1006. Send the downlink transmission at the time domain resource locations

FIG. 10

Network device

Terminal device

S1101. Request information, where the request information is used to request downlink enhancement

S1102. Indication information, where the indication information includes a quantity of time units occupied by one time of downlink transmission and a repetition count of the downlink transmission in one periodicity

S1103. Start location of a time domain resource for the downlink transmission

S1104: Determine time domain resource locations based on the start location, the quantity of time units occupied by one time of the downlink transmission, and the repetition count of the downlink transmission in one periodicity

S1105: Determine time domain resource locations based on the start location, the quantity of time units occupied by one time of the downlink transmission, and the repetition count of the downlink transmission in one periodicity

S1106. Send the downlink transmission at the time domain resource locations

FIG. 11

Communication apparatus 1200

Transceiver unit 1201

Processing unit 1202

FIG. 12

1300

Processor 1301

Instruction

1303

Memory 1302

Instruction

1304

Transceiver

Antenna

1305

1306

FIG. 13

Antenna

Control circuit

1401

1400

Memory

Processor

1402

Input/Output apparatus

FIG. 14

# EP 4 701 305 A1

## INTERNATIONAL SEARCH REPORT

| | International application No. |
|---|---|
| | **PCT/CN2024/086487** |

### A. CLASSIFICATION OF SUBJECT MATTER

H04W 72/1273(2023.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; VEN; USTXT; EPTXT; WOTXT; CNKI; IEEE; 3GPP: 下行, 传输, 时域, 时频, 位置, 起始, 开始, 初始, 时间, 单元, 单位, 个数, 数量, 次数, 数目, 周期, 重复, downlink+, DL, transmission, time, unit, number, quantity, time domain, location, start, period, repeat+

### C. DOCUMENTS CONSIDERED TO BE RELEVANT

| Category* | Citation of document, with indication, where appropriate, of the relevant passages | Relevant to claim No. |
|---|---|---|
| X | CN 108811105 A (HUAWEI TECHNOLOGIES CO., LTD.) 13 November 2018 (2018-11-13) description, paragraphs [0002]-[0235] | 1-30 |
| A | CN 107231218 A (CHINA ACADEMY OF TELECOMMUNICATIONS TECHNOLOGY) 03 October 2017 (2017-10-03) entire document | 1-30 |
| A | CN 111431685 A (HUAWEI TECHNOLOGIES CO., LTD.) 17 July 2020 (2020-07-17) entire document | 1-30 |
| A | WO 2022051948 A1 (BEIJING XIAOMI MOBILE SOFTWARE CO., LTD.) 17 March 2022 (2022-03-17) entire document | 1-30 |
| A | CATT. "Replacing "NR-UNIT" in MAC Specification" *3GPP TSG-RAN WG2 #99bis, R2-1710291*, 13 October 2017 (2017-10-13), entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 May 2024** | **08 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | International application No. |
|---|---|
| | **PCT/CN2024/086487** |

| Patent document<br>cited in search report | | | Publication date<br>(day/month/year) | Patent family member(s) | Publication date<br>(day/month/year) |
|---|---|---|---|---|---|
| CN | 108811105 | A | 13 November 2018 | None | |
| CN | 107231218 | A | 03 October 2017 | None | |
| CN | 111431685 | A | 17 July 2020 | None | |
| WO | 2022051948 | A1 | 17 March 2022 | None | |

Form PCT/ISA/210 (patent family annex) (July 2022)

REFERENCES CITED IN THE DESCRIPTION

**Patent documents cited in the description**

- CN 202310559513